# EUROPEAN PATENT APPLICATION

(11) **EP 4 349 597 A1**
(43) Date of publication of application: **10.04.2024**
(21) Application number: 22815908.3
(22) Date of filing: 24.05.2022
(51) Int. Cl.: B32B 27/30, B05D 1/36, B05D 5/08, B05D 7/24, B32B 27/00, B32B 27/18, C09K 3/18

(54) **WATER-REPELLENT, OIL-REPELLENT MEMBER HAVING ANTI-MICROBIAL, ANTI-MOLD, AND ANTI-VIRAL PROPERTIES, METHOD FOR PRODUCING WATER-REPELLENT, OIL-REPELLENT MEMBER, AND ARTICLE**

(30) Priority: 31.05.2021 JP 2021090772
(71) Applicant: SHIN-ETSU CHEMICAL CO., LTD., Tokyo 1000005 (JP)
(72) Inventor: SAKOH Ryusuke, Annaka-shi, Gunma 379-0224 (JP); YAMANE Yuji, Annaka-shi, Gunma 379-0224 (JP); INOUE Tomohiro, Kamisu-shi, Ibaraki 314-0102 (JP); FURUDATE Manabu, Kamisu-shi, Ibaraki 314-0102 (JP)
(74) Representative: Ter Meer Steinmeister & Partner
(86) International application number: PCT/JP2022/021186
(87) International publication number: WO 2022/255158

(57) **Abstract**

Provided is a water-repellent, oil-repellent member having anti-microbial, anti-mold, and anti-viral properties, the water-repellent, oil-repellent member having a primer layer as a first layer on at least one surface of a substrate, and furthermore having a water-repellent, oil-repellent layer as a second layer on the outer surface of the primer layer, wherein: the primer layer comprises a layer that has a film thickness of 10-5,000 nm and that contains a silicon-compound-based binder together with metal microparticles and/or metal oxide microparticles having anti-microbial, anti-mold, and anti-viral properties; and the water-repellent, oil-repellent layer comprises a layer that has a film thickness of 0.5-50 nm and that contains, as a principal component, a cured product of a fluorine-containing organic silicon compound. This water-repellent, oil-repellent member has exceptional production properties, makes it possible to maintain a hygienic, excellent anti-fouling surface over an extended period, and also has exceptional water repellency, oil repellency, and anti-microbial, anti-mold, and anti-viral properties.

## Description

### TECHNICAL FIELD

The present invention relates to a water/oil repellent member having both anti-microbial, anti-mold, and anti-viral properties and water/oil-repellent property and a method for producing the same, and more particularly, to a water/oil repellent member having an anti-microbial, anti-mold, and anti-viral layer formed between a substrate and a water/oil repellent layer, a method for producing the same, and an article.

### BACKGROUND ART

For the purpose of improving aesthetic appearance or visibility of articles, the demand for a technology of rendering articles unsusceptible to staining or the technology of cleaning off stains is increasing. In particular, since eyeglass lenses, smartphones, wearable terminals, car navigation panels, electronic instrument housings, kitchen cabinets, and transportation vehicle surfaces are susceptible to deposition of sebum and oil stains on their surface, it is desired to provide their surfaces with a water/oil repellent layer. On the other hand, from the viewpoint of preventing the spread of viruses and public health, provision of a layer having anti-microbial, anti-mold, and anti-viral properties has also been required at the same time. However, it is difficult to easily achieve both water/oil-repellent property and anti-microbial, anti-mold, and anti-viral properties.

To address the problem, JP-A 2017-513800 (Patent Document 1) discloses a technology of applying a water/oil repellent agent to a substrate such as glass having anti-microbial property. Specifically, the problem is solved by containing Ag⁺ ions in a substrate by an ion exchange method.

However, the substrate having anti-microbial property that can be prepared in the method proposed in Patent Document 1 is limited, and the application range is limited. Since it is necessary to produce a substrate having anti-microbial property, problems remain in terms of productivity and production cost.

JP-A 2018-521199 (Patent Document 2) discloses a technology of applying an anti-microbial primer to a surface of a substrate such as glass by a vacuum deposition method, and then treating the substrate with a water/oil repellent agent by a vacuum deposition method. It is characterized in that an organic substance is used as an anti-microbial substance to be deposited simultaneously with a silane coupling agent as a primer component.

However, since the primer proposed in Patent Document 2 is treated by a vacuum vapor deposition method, the substrate that can be treated is limited, and the application range is limited in terms of productivity and production cost. Organic anti-microbial agents are often effective only on specific microorganisms, and the method of use thereof is limited. Problems such as easy development of resistant bacteria, poor heat resistance, and low persistence while having excellent immediate effectivity, and concerns of influence on human bodies and the environment have increased, and attention is required for use in places where human hands touch.

As the prior art technology relating to the present invention, the following documents are cited as well as the above-cited documents.

### PRIOR ART DOCUMENTS

### PATENT DOCUMENTS

Patent Document 1: JP-A 2017-513800
Patent Document 2: JP-A 2018-521199
Patent Document 3: JP-A 2007-197425
Patent Document 4: JP-A 2007-297589
Patent Document 5: JP-A 2007-297543
Patent Document 6: JP-A 2008-088412
Patent Document 7: JP-A 2008-144144
Patent Document 8: JP-A 2010-031184
Patent Document 9: JP-A 2010-047516
Patent Document 10: JP-A 2011-116947
Patent Document 11: JP-A 2011-178835
Patent Document 12: JP-A 2014-084405
Patent Document 13: JP-A 2014-105235
Patent Document 14: JP-A 2013-253228
Patent Document 15: JP-A 2014-218639
Patent Document 16: WO 2013/121984

### NON-PATENT DOCUMENTS

Non-Patent Document 1: Miyano, Iron and Steel, 93 (2007) 1, 57-65
Non-Patent Document 2: H. Kawakami, ISIJ Intern., 48 (2008) 9, 1299-1304

### SUMMARY OF INVENTION

### TECHNICAL PROBLEM

An object of the present invention, which has been made under the above-mentioned circumstances, is to provide a water/oil repellent member having excellent production properties, making it possible to maintain a hygienic, excellent anti-fouling surface over an extended period, and having excellent anti-microbial, anti-mold, and anti-viral properties, a method for producing a water/oil repellent member having excellent anti-microbial, anti-mold, and anti-viral properties with respect to various substrates, and an article.

### SOLUTION TO PROBLEM

Making extensive investigations to attain the above object, the present inventors have found that a water/oil repellent member including a substrate, a primer layer on at least one surface of the substrate as a first layer, and a water/oil repellent layer on an outer surface of the primer layer as a second layer is obtained by a method including the steps of: wet coating a solution containing a silicon-compound-based binder, metal microparticles and/or metal oxide microparticles having anti-microbial, anti-mold, and anti-viral properties, and a dispersion medium on at least one surface of a substrate, removing the dispersion medium in the solution to form/deposit a primer layer containing the silicon-compound-based binder and the metal microparticles and/or metal oxide microparticles having anti-microbial, anti-mold, and anti-viral properties on at least one surface of the substrate, wet coating a solution containing a fluorine-containing organosilicon compound or dry coating the fluorine-containing organosilicon compound on an outer surface of the primer layer, and curing the fluorine-containing organosilicon compound to form/deposit a water/oil repellent layer on the outer surface of the primer layer, and the primer layer is composed of a layer containing a silicon-compound-based binder and metal microparticles and/or metal oxide microparticles having anti-microbial, anti-mold, and anti-viral properties, and having a thickness of 10 to 5,000 nm; that the water/oil repellent member in which the water/oil repellent layer is composed of a layer containing a cured product of a fluorine-containing organosilicon compound as a principal component and having a thickness of 0.5 to 50 nm can endow various substrates with a water/oil repellent film having excellent abrasion resistance and anti-microbial, anti-mold, and anti-viral properties in a consistent simple manner; and that the primer layer and the water/oil repellent layer can be coated even by the room temperature (25°C) process. The present invention is predicated on this finding.

That is, the present invention provides a water/oil repellent member having anti-microbial, anti-mold, and anti-viral properties, a method for producing the same, and an article, as defined below.
[1] A water/oil repellent member having anti-microbial, anti-mold, and anti-viral properties, the water/oil repellent member comprising a substrate, a primer layer on at least one surface of the substrate as a first layer, and a water/oil repellent layer on an outer surface of the primer layer as a second layer,
   the primer layer being composed of a layer containing a silicon-compound-based binder and metal microparticles and/or metal oxide microparticles having anti-microbial, anti-mold, and anti-viral properties, and having a thickness of 10 to 5,000 nm,
   the water/oil repellent layer being composed of a layer containing a cured product of a fluorine-containing organosilicon compound as a principal component and having a thickness of 0.5 to 50 nm.
[2] The water/oil repellent member according to [1], wherein the silicon-compound-based binder is a silica-based or siloxane-based silicon compound containing a silanol group.
[3] The water/oil repellent member according to [1] or [2], wherein the metal microparticles having anti-microbial, anti-mold, and anti-viral properties are microparticles of at least one metal selected from silver, copper, and zinc.
[4] The water/oil repellent member according to any one of [1] to [3], wherein the metal oxide microparticles having anti-microbial, anti-mold, and anti-viral properties are microparticles of titanium oxide.
[5] The water/oil repellent member according to any one of [1] to [4], wherein the fluorine-containing organosilicon compound is a fluorine-containing organosilane compound or fluorine-containing organosiloxane compound having at least one hydrolyzable silyl group at one or more molecular chain ends, or a fluorine-containing polysilazane compound, the hydrolyzable silyl group being a silyl group having a group selected from a C₁₋₁₂ alkoxy group, a C₂₋₁₂ alkoxyalkoxy group, a C₁₋₁₀ acyloxy group, a C₂₋₁₀ alkenyloxy group, a halogen group, and an amino group.
[6] The water/oil repellent member according to any one of [1] to [5], wherein the fluorine-containing organosilicon compound is a fluorooxyalkylene group-containing organosilane compound or fluorooxyalkylene group-containing organosiloxane compound having, in the molecule, a divalent linear perfluorooxyalkylene polymer residue represented by:
   -C_{d}F_{2d}-O-(CF₂O)ₚ(CF₂CF₂O)_{q}(CF₂CF₂CF₂O)ᵣ(CF₂CF₂CF₂CF₂O)ₛ(CF(CF₃)CF₂O)ₜ-C_{d}F_{2d}-wherein p, q, r, s, and t are each independently an integer of 0 to 200, p+q+r+s+t is 3 to 500, each repeat unit in parentheses to which p, q, r, s, and t are attached may be randomly arranged, d is an integer of 0 to 8 independently for each unit, and the unit with d may be linear or branched,
   and having at least one hydrolyzable silyl group at one or more molecular chain ends, or a fluorooxyalkylene group-containing polysilazane compound having the divalent linear perfluorooxyalkylene polymer residue.
[7] The water/oil repellent member according to any one of [1] to [6], wherein the fluorine-containing organosilicon compound is at least one selected from fluorooxyalkylene group-containing organosilane compounds or fluorooxyalkylene group-containing organosiloxane compounds having the following general formulae (1) to (5) and a fluorooxyalkylene group-containing polysilazane compound having the following general compositional formula (6):

   (A-Rf)_{α}ZW_{β} (1)

   Rf(ZW_{β})₂ (2)

   Z'(Rf-ZW_{β})_{γ} (3)

   wherein Rf is independently a divalent linear perfluorooxyalkylene polymer residue represented by:
   -C_{d}F_{2d}-O-(CF₂O)ₚ(CF₂CF₂O)_{q}(CF₂CF₂CF₂O)ᵣ(CF₂CF₂CF₂CF₂O)ₛ(CF(CF₃)CF₂O)ₜ-C_{d}F_{2d}-, p, q, r, s, and t are each independently an integer of 0 to 200, p+q+r+s+t is 3 to 500, each repeat unit in parentheses to which p, q, r, s, and t are attached may be randomly arranged, d is an integer of 0 to 8 independently for each unit, and the unit with d may be linear or branched; A is independently a fluorine atom, a hydrogen atom, or a monovalent fluorine-containing group whose end is a -CF₃ group, a -CF₂H group, or a -CH₂F group, Z and Z' are each independently a single bond, or a di to octa-valent organic group which may contain a nitrogen atom, an oxygen atom, a silicon atom, a phosphorus atom, or a sulfur atom and may be substituted with fluorine, and W is independently a monovalent organic group having a hydrolyzable group at the end; α and β are each independently an integer of 1 to 7 and α+β is 2 to 8; and γ is an integer of 2 to 8,

      A-Rf-Q-(Y)_{δ}-B (4)

      Rf(Q-(Y)_{δ}-B)₂ (5)
   wherein Rf and A are as defined above, Q is independently a single bond or a divalent organic group, δ is independently an integer of 1 to 10, Y is independently a divalent organic group having a hydrolyzable group, and B is independently a hydrogen atom, a C₁₋₄ alkyl group, or a halogen atom, and

      A-Rf-Q-Si(NH)_{3/2} (6)
   wherein Rf, A, and Q are as defined above.
[8] The water/oil repellent member according to [7], wherein the fluorooxyalkylene group-containing organosilane compound, the fluorooxyalkylene group-containing organosiloxane compound, and the fluorooxyalkylene group-containing polysilazane compound having formulae (1) to (6) are the following: 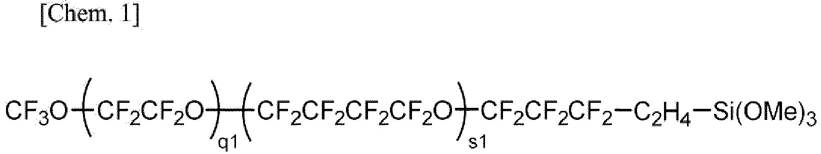 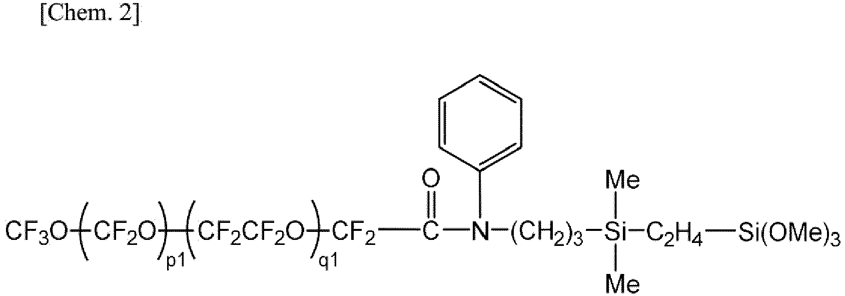 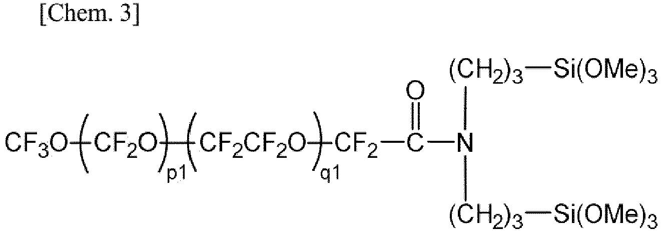 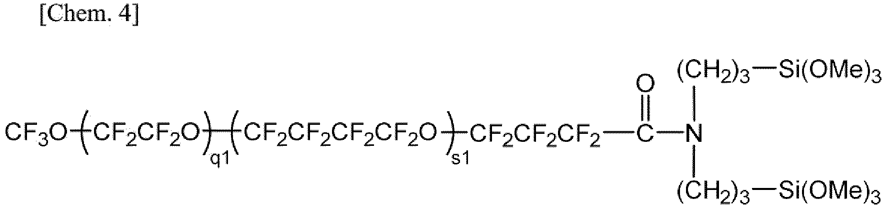 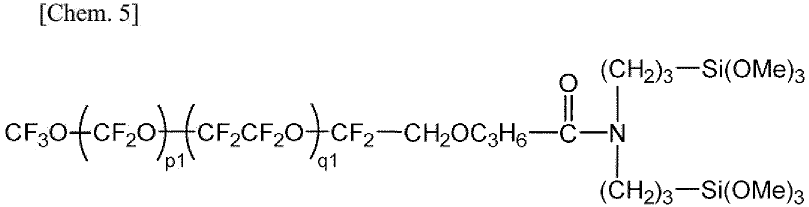 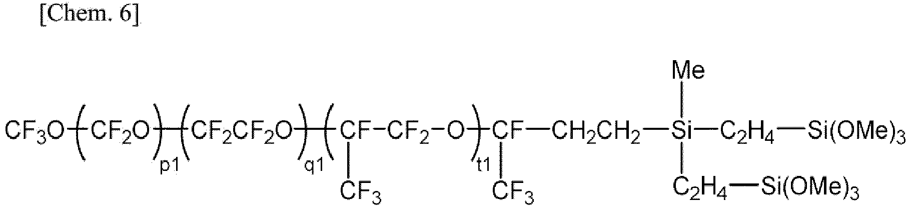 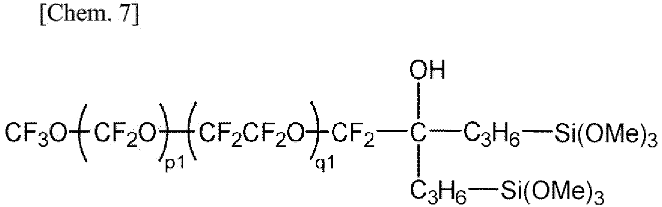 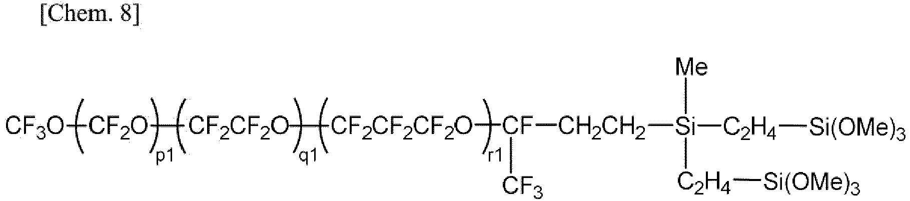 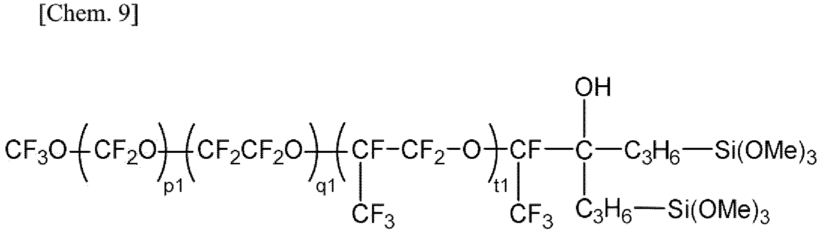 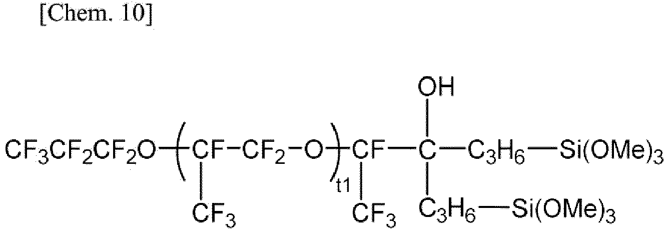 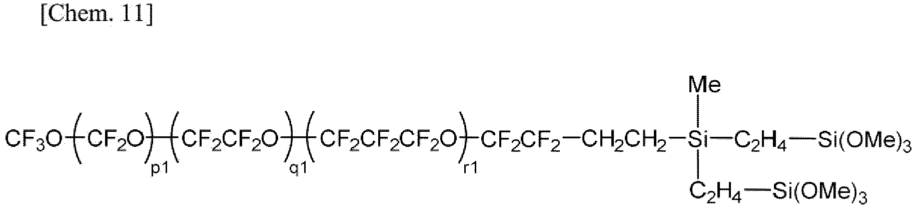 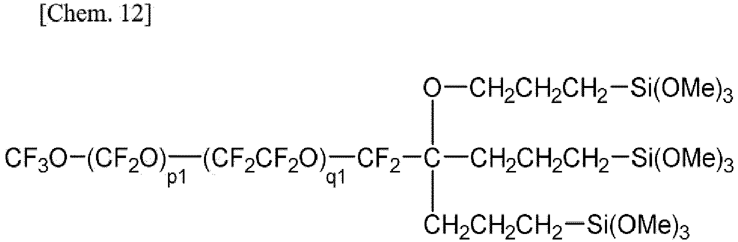 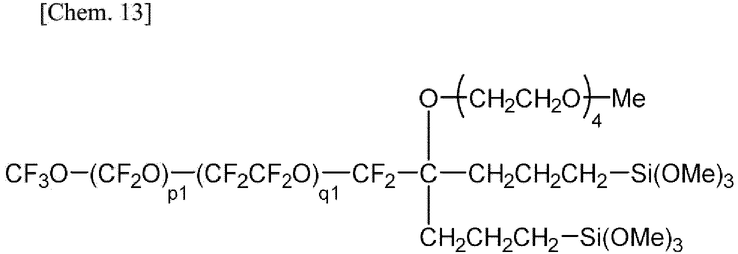 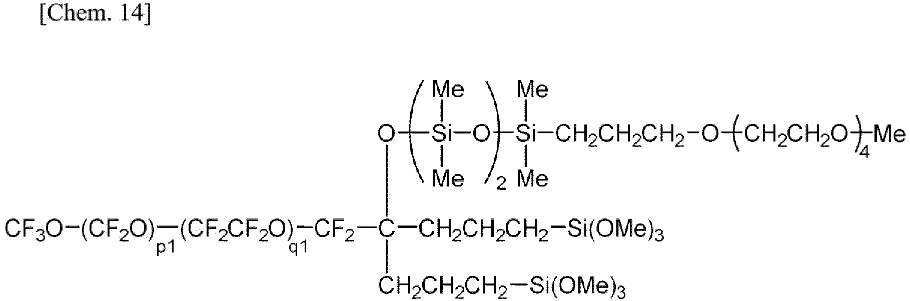 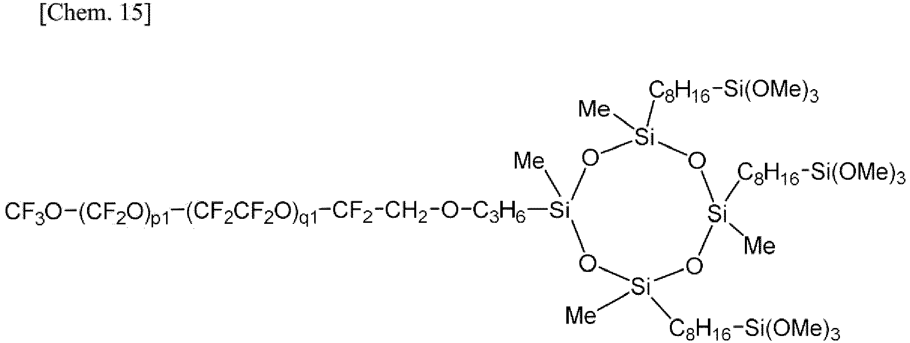 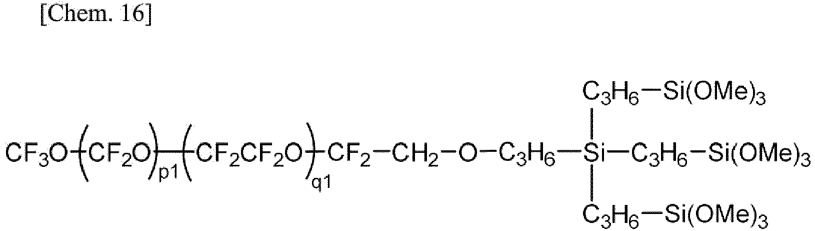 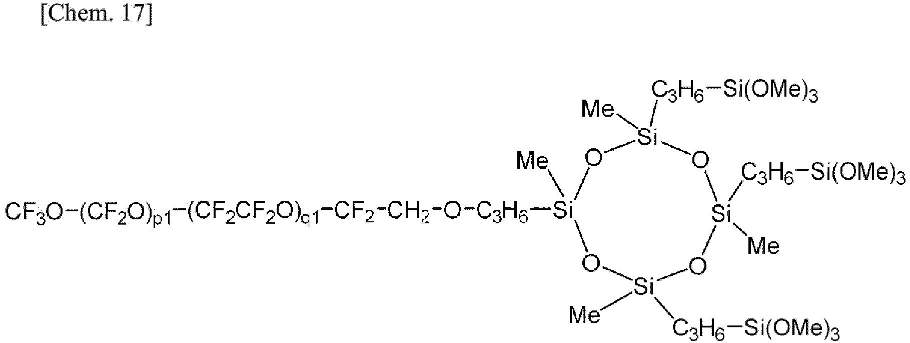 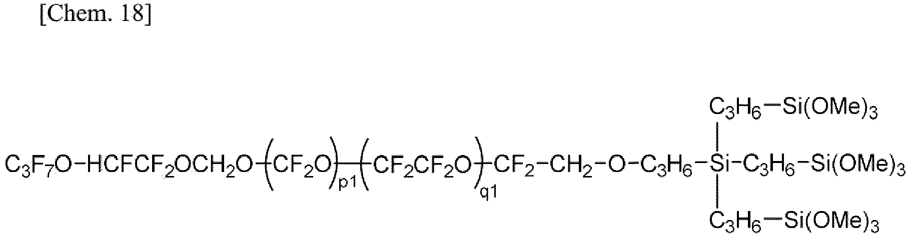 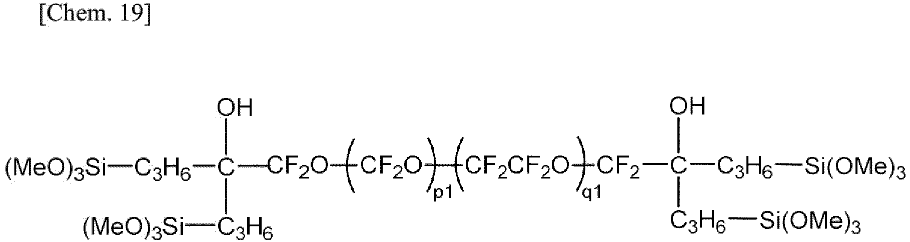 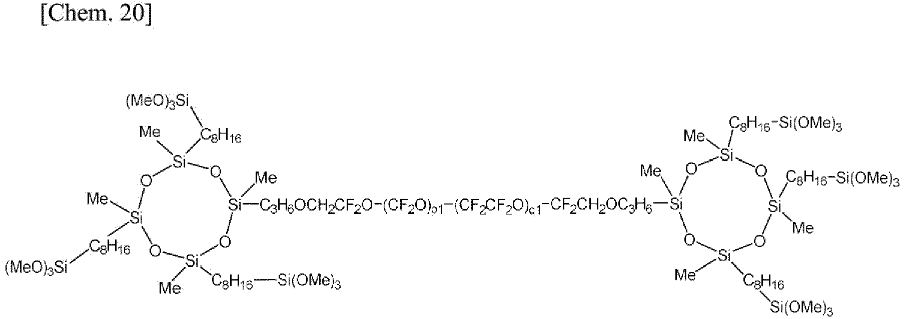 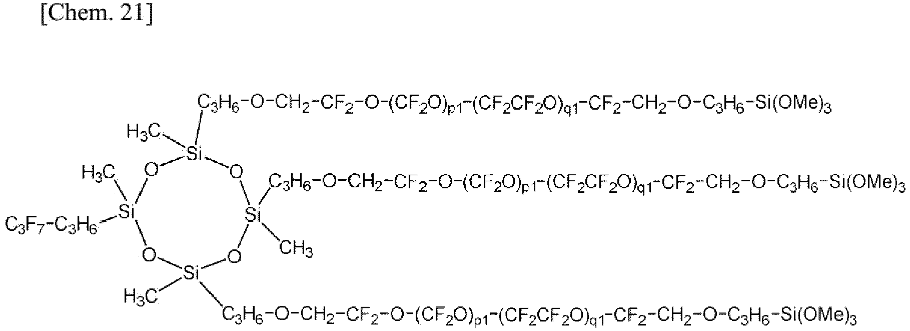 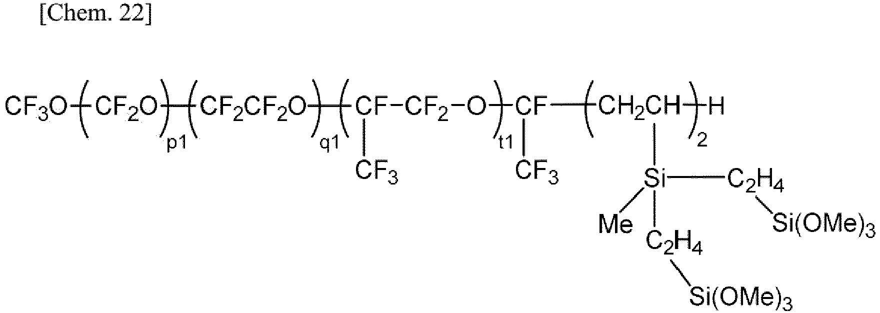 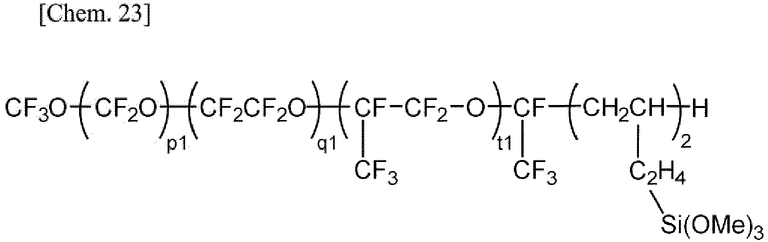 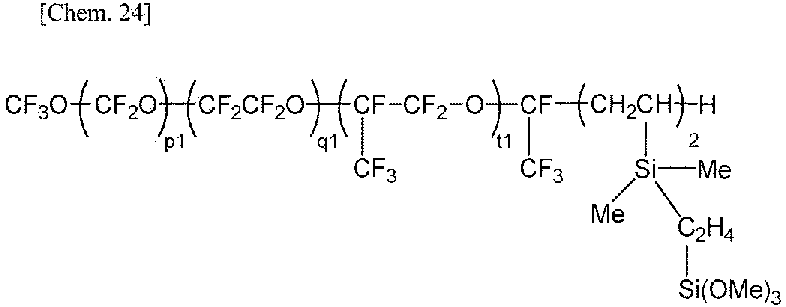 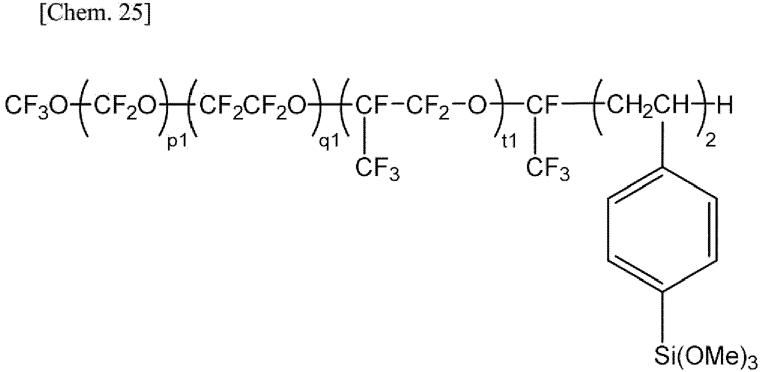 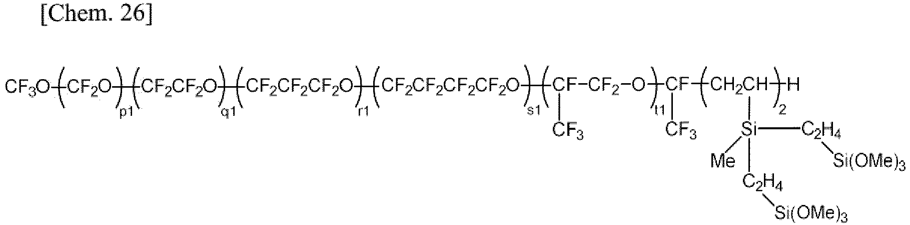 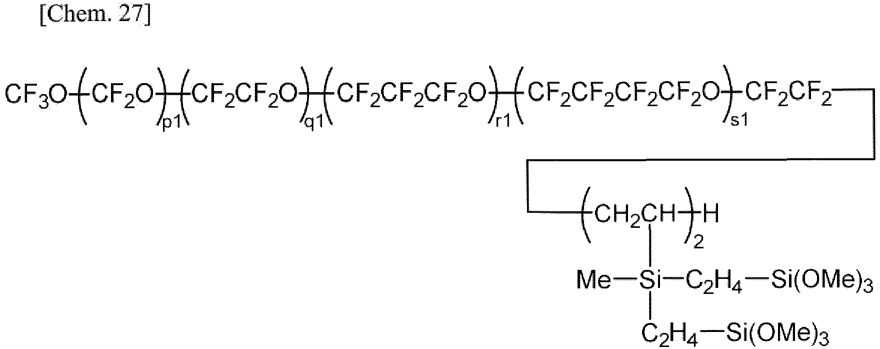 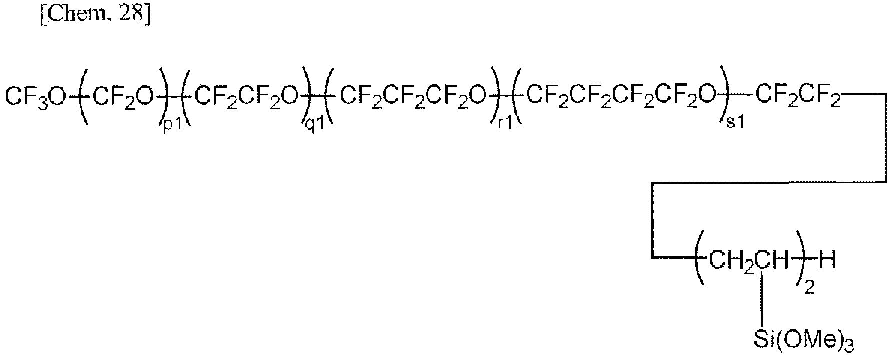 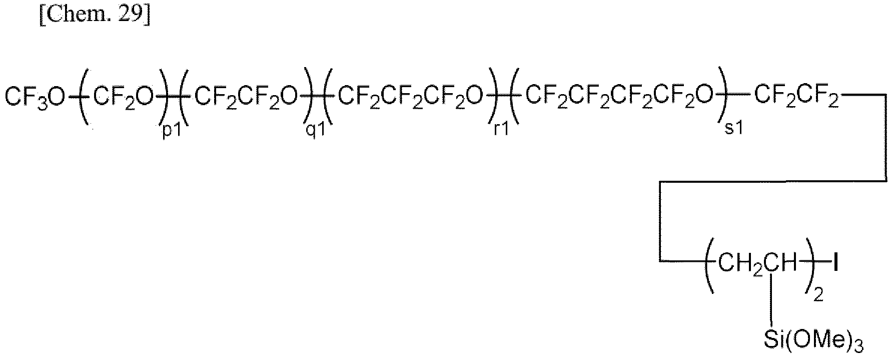 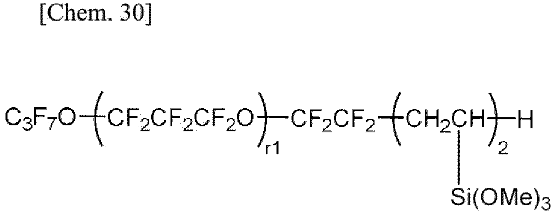 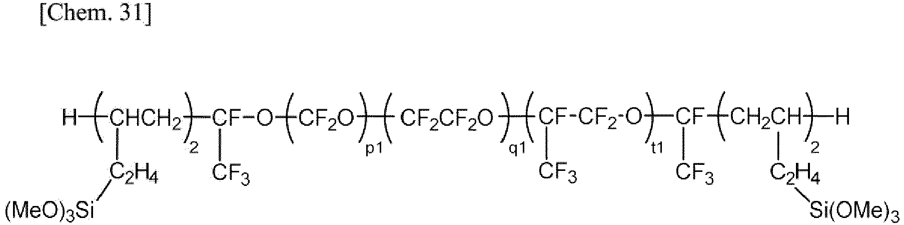 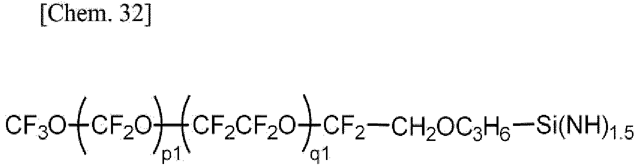 wherein Me is a methyl group, p1, q1, r1, s1, and t1 are each independently an integer of 1 to 200, the sum of p1, q1, r1, s1, and t1 is 3 to 500, and each repeat unit in parentheses to which p1, q1, r1, s1, and t1 are attached may be randomly arranged.
[9] The water/oil repellent member according to any one of [1] to [8], wherein the substrate is of resin, metal, ceramic, glass, sapphire, marble, or artificial marble.
[10] An article using the water/oil repellent member according to any one of [1] to [9].
[11] The article according to [10], which is a building member, a kitchen member, furniture, an electronic device, a transportation device, or a sanitary ceramic.
[12] A method for producing the water/oil repellent member according to any one of [1] to [9], the method comprising the steps of
   wet coating a solution containing a silicon-compound-based binder, metal microparticles and/or metal oxide microparticles having anti-microbial, anti-mold, and anti-viral properties, and a dispersion medium on at least one surface of a substrate,
   removing the dispersion medium in the solution to form/deposit a primer layer containing the silicon-compound-based binder and the metal microparticles and/or metal oxide microparticles having anti-microbial, anti-mold, and anti-viral properties on at least one surface of the substrate,
   wet coating a solution containing a fluorine-containing organosilicon compound or dry coating the fluorine-containing organosilicon compound on an outer surface of the primer layer, and
   curing the fluorine-containing organosilicon compound to form/deposit a water/oil repellent layer on the outer surface of the primer layer.

In the present invention, the "linear perfluorooxyalkylene polymer residue" means that divalent fluorooxyalkylene repeat units constituting the perfluorooxyalkylene structure of the main chain are linearly linked, and each divalent perfluorooxyalkylene unit itself may be, for example, a fluorooxyalkylene unit having a branched structure such as -[CF₂CF(CF₃)O]-.

### ADVANTAGEOUS EFFECTS OF INVENTION

According to the present invention, it is possible to form a water/oil repellent member having a surface with both anti-microbial, anti-mold, and anti-viral properties and water/oil-repellent property. The method for producing the water/oil repellent member enables to form the relevant layer by the wet process (e.g., brush coating, spin coating, spraying, gravure coating, die coating, bar coating or slit coating) without resorting essentially to the vacuum process or high-temperature heating process. The method therefor can be applied to a variety of applications, and is particularly suitable for applications in which anti-microbial, anti-mold, and anti-viral properties and anti-fouling property are required. For example, the present invention is particularly useful for housings and display parts of smartphones, smartwatches, smart glasses, PCs, TVs, toys, medical devices, and the like; surfaces and frame parts of optical lenses such as eyeglass lenses, camera lenses, and the like; touch panel displays, protective films, and protective glass used for transportation devices of automobiles, buses, trains, aircraft, ships, and the like; cover glass and cover resins of sensors and radar devices; reflector materials for communication; portions touched by a person of tables, dashboards, windows, floors, and the like; floors and walls of hospitals, buildings, schools, apartments, residences, houses, stores, and the like; and surfaces touched by a large number of unspecified persons of toilets, bathrooms, beds, desks, chairs, walls, floors, windows, handrails, and the like.

### DESCRIPTION OF EMBODIMENTS

Hereinafter, the present invention is described in more detail.

A water/oil repellent member of the present invention is a water/oil repellent member having a substrate, a primer layer on at least one surface of the substrate as a first layer, and a water/oil repellent layer on an outer surface of the primer layer as a second layer, wherein the primer layer is composed of a layer of 10 to 5,000 nm thickness containing a silicon-compound-based binder and metal microparticles and/or metal oxide microparticles having anti-microbial, anti-mold, and anti-viral properties, and the water/oil repellent layer is composed of a layer of 0.5 to 50 nm thickness containing a cured product of a fluorine-containing organosilicon compound as a principal component.

The present invention provides a water/oil repellent member, which has, on surfaces (at least one surface) of various substrates, a primer layer (first layer) containing a silicon-compound-based binder and metal microparticles and/or metal oxide microparticles having anti-microbial, anti-mold, and anti-viral properties, and having a thickness of 10 to 5,000 nm, further has, on the surface thereof, a water/oil repellent layer (second layer) containing a cured product of a fluorine-containing organosilicon compound as a principal component and having a thickness of 0.5 to 50 nm, and which has anti-microbial, anti-mold, and anti-viral properties, obtained by, for example, a method of wet coating a solution containing a silicon-compound-based binder, metal microparticles and/or metal oxide microparticles having anti-microbial, anti-mold, and anti-viral properties, and a dispersion medium on surfaces (at least one surface) of various substrates, removing the dispersion medium in the solution to form/deposit a primer layer (first layer) containing the silicon-compound-based binder and the metal microparticles and/or metal oxide microparticles having anti-microbial, anti-mold, and anti-viral properties on at least one surface of the substrate, wet coating a solution (water/oil repellent agent) containing a fluorine-containing organosilicon compound or dry coating the fluorine-containing organosilicon compound or a mixture containing the fluorine-containing organosilicon compound on an outer surface of the primer layer, and curing the fluorine-containing organosilicon compound to form/deposit a water/oil repellent layer (second layer) on the outer surface of the primer layer.

The substrate which can be used in the present invention is not particularly limited, examples thereof include resins, metals, ceramics, quartz, glass, sapphire, diamond, marble, and artificial marble, and resins, metals, ceramics, glass, sapphire, marble, and artificial marble are particularly suitable.

Examples of the resin include thermoplastic resins and thermosetting resins, and specifically, the following resins may be preferable. Examples thereof include celluloid, cellulose acetate, cellulose propionate, cellulose butyrate, aliphatic polyamides such as 6-nylon, 6,6-nylon, 12-nylon, aromatic polyamides, ABS resins, AS resins, polystyrene, polyolefins such as polyethylene (low density or high density) and polypropylene, polyvinyl chloride, polyvinylidene chloride, ethylene-vinyl acetate copolymers, polyvinyl alcohol, polyacetal, saturated polyesters such as polycarbonate, polyethylene terephthalate, and polybutylene terephthalate, aromatic polyesters, polyether ketones, polyether ether ketones, polysulfone, polyether sulfone, polyether imide, polyarylate, polymethylpentene, ionomers, liquid crystal polymers, polyimides, polyamide imides, fluoro-resins, polyphenylene sulfide, (modified) polyphenylene oxide, thermoplastic resins such as thermoplastic polyurethane, or thermosetting resins such as epoxy resins, unsaturated polyesters, thermosetting polyurethane, polyimide, diethylene glycol bisallyl carbonate polymers (commonly known as CR-39), (co)polymers of di(meth)acrylate of (halogenated) bisphenol A, (co)polymers of urethane-modified di(meth)acrylate of (halogenated) bisphenol A, and copolymers of diacrylate compounds or vinyl benzyl alcohol with unsaturated thiol compounds and the like. A coating material may be applied.

Examples of the metal include magnesium, magnesium alloys, titanium, titanium alloys, chromium, iron, nickel, cobalt, copper, zinc, yttrium, zirconium, niobium, molybdenum, ruthenium, rhodium, palladium, silver, tungsten, platinum, gold, stainless steel, aluminum, aluminum alloys, duralumin, and Hastelloy.

Examples of the ceramic include alumina, zirconia, silicon nitride, silicon carbide, aluminum nitride, boron nitride, forsterite, steatite, cordierite, sialon, machinable ceramics, barium titanate, lead zirconate titanate, ferrite, mullite, and zircon.

Examples of the glass include soda glass, crown glass, lead glass, borosilicate glass, crystallized glass, quartz glass, aluminosilicate glass, TEMPAX, Pyrex^{®}, and Neoceram, and the glass may be subjected to a chemical strengthening treatment or a physical strengthening treatment.

The primer layer (first layer) to be formed/deposited on at least one surface of the substrate is composed of a layer containing a silicon-compound-based binder and metal microparticles and/or metal oxide microparticles having anti-microbial, anti-mold, and anti-viral properties, and having a thickness of 10 to 5,000 nm.

The silicon-compound-based binder is the obtained one by removing a dispersion medium from a colloidal dispersion, a solution, or an emulsion of a solid or liquid silicon compound, preferably a colloidal dispersion, a solution, or an emulsion containing a silica-based or siloxane-based silicon compound having a silanol group (hydroxy group bonded to a silicon atom) with a dispersion medium such as water or aqueous dispersion medium, and specific examples thereof include those obtained by removing a dispersion medium from colloidal silica preferable particle size: 1 to 150 nm); a silicate solution such as silicate (hydrolytic partial condensate of tetraalkoxysilane); an emulsion of a hydrolytic partial condensate of organoalkoxysilane and alkoxysiloxane; an emulsion of silicone resin such as organosilsesquioxane resin or a copolymer resin containing a triorganosiloxy unit and SiO₂ unit; an emulsion of a copolymer of silicone resin and another organic resin, such as a silicone resin-acrylic resin copolymer and a silicone resin-urethane resin copolymer; or the like.

The content of the silicon-compound-based binder in the primer layer is in a range of 1 to 99 wt%, preferably 10 to 90 wt%, more preferably 20 to 80 wt%, still more preferably 30 to 70 wt% per the entire primer layer. If the content of the silicon-compound-based binder is less than 1 wt%, the strength of the film may be reduced and the film may be peeled off or dissolved in water, and if the content thereof is more than 99 wt%, the anti-microbial, anti-mold, and anti-viral component may not be sufficiently exposed, and the anti-microbial, anti-mold, and anti-viral effect may be deteriorated.

In the present invention, the metal microparticles having anti-microbial, anti-mold, and anti-viral properties used as an anti-microbial component are a metal simple substance or an alloy composition containing at least one or more metal components that enhance the anti-microbial, anti-mold, and anti-viral properties. The metal component that enhances the anti-microbial, anti-mold, and anti-viral properties refers to a metal component that is harmful to microorganisms such as bacteria, molds, and viruses, but is relatively less harmful to the human body, and examples thereof include silver, copper, zinc, platinum, palladium, nickel, aluminum, titanium, cobalt, zirconium, molybdenum, and tungsten in which a decrease in the number of viable bacteria of Staphylococcus aureus and Escherichia coli is confirmed when a film is coated with metal component particles and a standard test of antibacterial products of JIS Z 2801 is performed (Non-Patent Document 1: Miyano, Iron and Steel, 93 (2007) 1, 57-65; Non-Patent Document 2: H. Kawakami, ISIJ Intern., 48 (2008) 9, 1299-1304). The metal microparticles used in the present invention are preferably a component containing at least one metal of those described above, and particularly preferably contain at least one metal of silver, copper, and zinc.

More specific examples thereof include microparticles containing metal components such as silver, copper, zinc, a silver-copper alloy, a silver-palladium alloy, a silver-platinum alloy, a silver-tin alloy, a gold-copper alloy, a silver-nickel alloy, a silver-antimony alloy, a silver-copper-tin alloy, a gold-copper-tin alloy, a silver-nickel-tin alloy, a silver-antimony tin alloy, a platinum-manganese alloy, a silver-titanium alloy, a copper-tin alloy, a cobalt-copper alloy, a zinc-magnesium alloy, a silver-zinc alloy, a copper-zinc alloy, and a silver-copper-zinc alloy.

The mean particle size of the metal microparticles having anti-microbial, anti-mold, and anti-viral properties is preferably 1 to 1,000 nm, more preferably 2 to 200 nm. The lower limit value of the mean particle size of the metal microparticles can theoretically be used up to the minimum particle size that can have anti-microbial, anti-mold, and anti-viral properties, but practically, the mean particle size may be 1 nm or more. If the mean particle size is too large, appearance deterioration such as a strongly colored coating film (primer layer) or a turbid coating film (decrease in transparency) may occur, and the anti-microbial, anti-mold, and anti-viral properties may be lowered due to a decrease in the surface area of the metal microparticles. The mean particle size can be determined as a cumulative weight average value D50 (or median diameter) using a particle size distribution measuring apparatus by a laser diffraction method or the like (the same applies hereinafter).

As for the content of the metal component that enhances the anti-microbial, anti-mold, and anti-viral properties in the metal microparticles, the content of the anti-microbial, anti-mold, and anti-viral metal can be set to 1 to 100 wt%, preferably 10 to 100 wt%, more preferably 50 to 100 wt%, still more preferably 75 to 100 wt% per the total weight of the metal microparticles. This is because when the content of the metal component for enhancing the anti-microbial, anti-mold, and anti-viral properties is less than 1 wt%, the anti-microbial, anti-mold, and anti-viral performances may not be sufficiently exhibited.

In the present invention, as the metal oxide microparticles having anti-microbial, anti-mold, and anti-viral properties used as an anti-microbial component, those having a photocatalytic action are suitable. The photocatalyst is a generic term for substances that exhibit a photocatalytic action when irradiated with light having energy of a predetermined band gap or more. As such a substance, microparticles of known metal oxide semiconductors such as titanium oxide, tungsten oxide, zinc oxide, tin oxide, iron oxide, bismuth oxide, bismuth vanadate, and strontium titanate can be used singly or in combination of two or more kinds thereof. Among them, it is desirable to use titanium oxide microparticles which have a particularly high photocatalytic action under irradiation with a light beam including ultraviolet light having a wavelength of 400 nm or less, are chemically stable, and are relatively easy to synthesize nano-sized particles and disperse the nano-sized particles in a solvent.

As the crystal phase of the titanium oxide microparticles, three types of crystal phases of a rutile type, an anatase type, and a brookite type are usually known, but it is preferable to mainly use an anatase type or a rutile type. The term "mainly" described herein means that such a crystal phase is contained in an amount of usually 50 wt% or more, preferably 70 wt% or more, more preferably 90 wt% or more of the entire titanium oxide microparticle crystal, and may be 100 wt%.

As the titanium oxide microparticles, in order to enhance the photocatalytic activity, titanium oxide microparticles in which a metal compound such as platinum, gold, palladium, iron, copper, or nickel is supported, or titanium oxide microparticles doped with an element such as tin, nitrogen, sulfur, or carbon can also be used.

The mean particle size of the metal oxide microparticles having anti-microbial, anti-mold, and anti-viral properties is preferably 3 to 100 nm, more preferably 4 to 30 nm. If the mean particle size is too small, the activity (anti-microbial, anti-mold, and anti-viral properties) of the metal oxide microparticles may not be sufficiently expressed, and if the mean particle size is too large, the coating film (primer layer) may become cloudy and impair the appearance.

The total content of the metal microparticles and the metal oxide microparticles having anti-microbial, anti-mold, and anti-viral properties in the primer layer is in a range of 1 to 99 wt%, preferably 10 to 90 wt%, more preferably 20 to 80 wt%, still more preferably 30 to 70 wt% per the entire primer layer. If the (total) content of the metal microparticles and the metal oxide microparticles having anti-microbial, anti-mold, and anti-viral properties is less than 1 wt%, the anti-microbial, anti-mold, and anti-viral properties may not be sufficiently exhibited, and if the content thereof is more than 99 wt%, the appearance of the film may be significantly impaired such as cloudiness, or the strength of the film may be reduced.

For the same reason as described above, the content of the metal oxide microparticles having anti-microbial, anti-mold, and anti-viral properties in the primer layer is in a range of 1 to 99 wt%, preferably 10 to 90 wt%, more preferably 20 to 80 wt%, still more preferably 30 to 70 wt% per the entire primer layer, and the content of the metal microparticles having anti-microbial, anti-mold, and anti-viral properties is in a range of 30 wt% or less (0 to 30 wt%), preferably 25 wt% or less (0 to 25 wt%), more preferably 20 wt% or less (0 to 20 wt%), still more preferably 17 wt% or less (0 to 17 wt%) per the entire primer layer.

The primer layer can be formed (deposited) by, for example, wet coating a solution containing a silicon-compound-based binder, metal microparticles and/or metal oxide microparticles having anti-microbial, anti-mold, and anti-viral properties, and a dispersion medium (such as water or aqueous dispersion medium) onto the surface (at least one surface) of various substrates, and then drying and removing the dispersion medium.

As the dispersion medium, water is preferably used, but a mixed solvent (aqueous dispersion medium) of a hydrophilic organic solvent mixed with water at an arbitrary ratio and water may be used. As the water, for example, purified water such as filtered water, deionized water, distilled water, or pure water is preferable. As the hydrophilic organic solvent, for example, alcohols such as methanol, ethanol, and isopropanol, glycols such as ethylene glycol, glycol ethers such as ethylene glycol monomethyl ether, ethylene glycol monoethyl ether, and propylene glycol-n-propyl ether, glymes, and the like are preferable. In the case of using the mixed solvent, the proportion of the hydrophilic organic solvent in the mixed solvent is more than 0 wt%, preferably 0.1 wt% or more, and preferably 50 wt% or less, more preferably 20 wt% or less, still more preferably 10 wt% or less.

The dispersion medium is preferably diluted so as to have a concentration (total of the silicon-compound-based binder and the metal microparticles and/or the metal oxide microparticles having anti-microbial, anti-mold, and anti-viral properties) of 0.01 to 2 wt%, particularly 0.05 to 1 wt% as solids. If the concentration thereof is too low, the film may not be uniformly formed and the anti-microbial effect may not be easily exhibited, and if the concentration is too high, the film may become thick and appearance abnormality such as cloudiness and cracking may occur.

In the solution containing a silicon-compound-based binder, metal microparticles and/or metal oxide microparticles having anti-microbial, anti-mold, and anti-viral properties, and a dispersion medium (such as water or aqueous dispersion medium), components such as ultraviolet absorbers, photocatalysts, light stabilizers, antioxidants, leveling agents, anti-foaming agents, pigments, dyes, dispersants, anti-fogging agents, and surfactants may be used as necessary. These are preferably added in such a range that the amount of the silicon-compound-based binder in the primer layer obtained by removing the dispersion medium is 1 wt% or more (particularly 1 to 99 wt%), and the amount of the metal microparticles and/or the metal oxide microparticles having anti-microbial, anti-mold, and anti-viral properties is 1 wt% or more (particularly 1 to 99 wt%).

The primer layer (first layer) can be formed by applying the solution containing a silicon-compound-based binder, metal microparticles and/or metal oxide microparticles having anti-microbial, anti-mold, and anti-viral properties, and a dispersion medium to the surface of the substrate by a wet coating process, specifically dipping, brush coating, spin coating, spray coating, gravure coating, die coating, bar coating, slit coating, flow coating, or the like, and then volatilizing the solvent by drying process to be removed. The drying process may be performed by leaving the substrate at room temperature, but heating may be performed, for example, at 40 to 500°C for 1 minute to 24 hours in a temperature range which does not affect the substrate.

The thickness of the primer layer (first layer) formed/deposited on at least one surface of the substrate is 10 to 5,000 nm, preferably 15 to 600 nm. If the thickness of the primer layer is less than 10 nm, sufficient adhesion with the substrate or the cured product of the fluorine-containing organosilicon compound (the water/oil repellent layer as the second layer) may not be obtained, or sufficient anti-microbial, anti-mold, and anti-viral properties may not be exhibited, and if the thickness thereof is more than 5,000 nm, the film may be cracked, resulting in poor appearance or poor adhesion. In the present invention, the thickness can be measured by a known method such as spectroscopic ellipsometry, an X-ray reflection method, or a cross-sectional TEM method (the same applies hereinafter).

The water/oil repellent layer (second layer) to be formed/deposited on the outer surface of the primer layer is composed of a layer containing a cured product of a fluorine-containing organosilicon compound as a principal component and having a thickness of 0.5 to 50 nm. In the water/oil repellent layer (second layer) of the present invention, the "principal component" means that the content of the cured product of the fluorine-containing organosilicon compound per the entire component constituting the water/oil repellent layer is 50 wt% or more (50 to 100 wt%), preferably 51 to 100 wt%, more preferably 75 to 100 wt%, still more preferably 95 to 100 wt%.

The fluorine-containing organosilicon compound is preferably a fluorine-containing organosilane compound or fluorine-containing organosiloxane compound having at least one hydrolyzable silyl group at one or more molecular chain ends, or a fluorine-containing polysilazane compound.

As the fluorine-containing organosilane compound or fluorine-containing organosiloxane compound having at least one hydrolyzable silyl group at one or more molecular chain ends, any of the hydrolyzable fluorine-containing organosilicon compounds and the like can be used which are described in JP-A 2007-197425, JP-A 2007-297589, JP-A 2007-297543, JP-A 2008-088412, JP-A 2008-144144, JP-A 2010-031184, JP-A 2010-047516, JP-A 2011-116947, JP-A 2011-178835, JP-A 2014-084405, JP-A 2014-105235, JP-A 2013-253228, JP-A 2014-218639, WO 2013/121984 (Patent Documents 3 to 16), and the like.

The fluorine-containing organosilicon compound is described in further detail.

In the fluorine-containing organosilicon compound according to the present invention, the fluorine-containing organosilane compound or fluorine-containing organosiloxane compound having at least one hydrolyzable silyl group at one or more molecular chain ends is preferably a fluorine-containing organosilicon compound at least one, present 1 to 6, more preferably 2 to 4 hydrolyzable silyl groups at one or more, preferably 1 to 14, more preferably 1 to 7 molecular chain ends (for example, at least one, preferably 2 to 60, more preferably 3 to 30 hydrolyzable silyl groups in one molecule), and the compound is more preferably an organosilicon compound having a hydrolyzable silyl group and a fluorine atom in one molecule, the hydrolyzable silyl group such as being typically selected from C₁₋₁₂, especially C₁₋₁₀ alkoxy groups such as a methoxy group, an ethoxy group, a propoxy group, and a butoxy group, C₂₋₁₂, especially C₂₋₁₀ alkoxyalkoxy groups such as a methoxymethoxy group and a methoxyethoxy group, C₁₋₁₀ acyloxy groups such as an acetoxy group, C₂₋₁₀ alkenyloxy groups such as an isopropenoxy group, halogen groups such as a chloro group, a bromo group, and an iodo group, and a silyl group having an amino group, and having a fluorine atom in one molecule.

In the fluorine-containing organosilicon compound, the fluorine-containing organosilane compound or fluorine-containing organosiloxane compound having at least one hydrolyzable silyl group at one or more molecular chain ends, or the fluorine-containing polysilazane compound may be preferably a compound having a fluorooxyalkylene group (that is, monovalent or divalent perfluoropolyether residue) in the molecule. The fluorooxyalkylene group refers to a compound of (poly)fluorooxyalkylene structure having a plurality of repeat units: -CⱼF₂ⱼO- bonded (divalent linear perfluorooxyalkylene polymer residue) (wherein j is an integer of 1 or more, preferably 1 to 6, more preferably 1 to 4). Especially, the structure may have 3 to 500, preferably 6 to 200, still more preferably 8 to 100, even more preferably 10 to 80 repeat units.

The repeat unit -CⱼF₂ⱼO- may be linear or branched. Examples thereof include the following units while two or more kinds of these repeat units may be bonded.

-CF₂O-

-CF₂CF₂O-

-CF₂CF₂CF₂O-

-CF(CF₃)CF₂O-

-CF₂CF₂CF₂CF₂O-

-CF₂CF₂CF₂CF₂CF₂O-

-CF₂CF₂CF₂CF₂CF₂CF₂O-

-C(CF₃)₂O-

The (poly)fluorooxyalkylene structure (divalent linear perfluorooxyalkylene polymer residue) is particularly
-C_{d}F_{2d}-O-(CF₂O)ₚ(CF₂CF₂O)_{q}(CF₂CF₂CF₂O)ᵣ(CF₂CF₂CF₂CF₂O)ₛ(CF(CF₃)CF₂O)ₜ-C_{d}F_{2d}-, p, q, r, s, and t are each independently an integer of 0 to 200, preferably p is an integer of 0 to 100, q is an integer of 0 to 100, r is an integer of 0 to 100, s is an integer of 0 to 50, t is an integer of 0 to 100, and p+q+r+s+t is an integer of 3 to 500, preferably an integer of 10 to 100. Each repeat unit in parentheses to which p, q, r, s, and t are attached may be randomly arranged. d is an integer of 0 to 8 independently for each unit, preferably an integer of 0 to 5, more preferably an integer of 0 to 2, and the unit with d may be linear or branched. Specific examples are shown by the following structures. 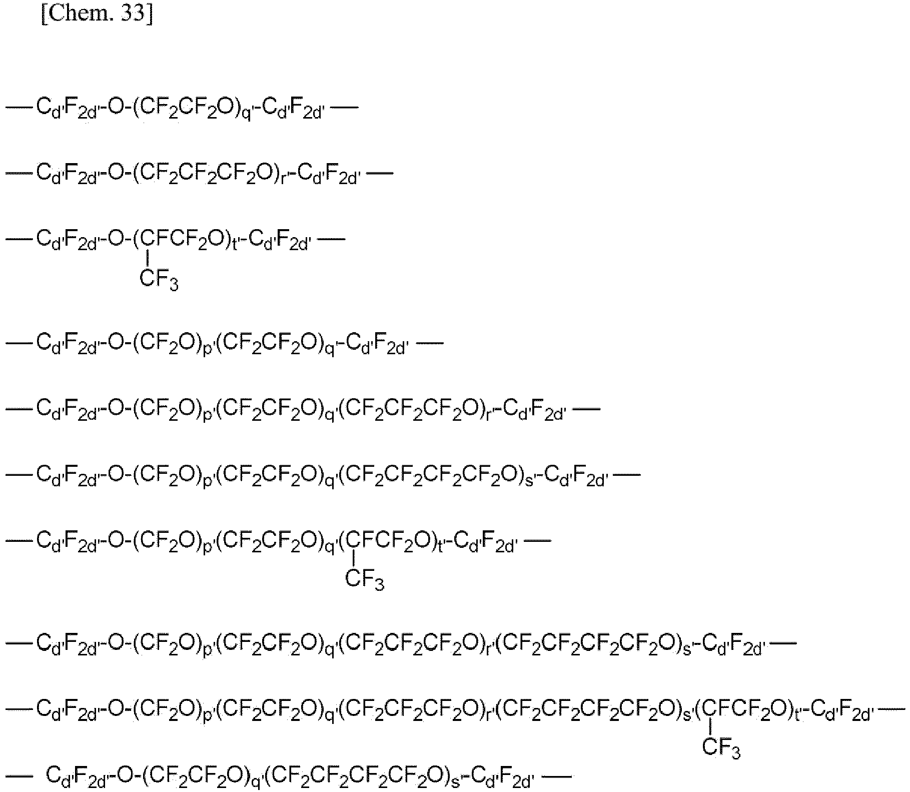 wherein p', q', r', s', and t' are each independently an integer of 1 to 200, and the sum of p', q', r', s', and t' is 3 to 500; Each repeat unit in parentheses to which p', q', r', s', and t' are attached may be randomly arranged; and d' is independently an integer of 0 to 5, and the unit with d' may be linear or branched.

The fluorine-containing organosilicon compound according to the present invention is more preferably at least one (fluorine-containing organosilicon compound) selected from fluorooxyalkylene group-containing organosilane compounds or fluorooxyalkylene group-containing organosiloxane compounds having the following general formulae (1) to (5), and a fluorooxyalkylene group-containing polysilazane compound having the following general compositional formula (6). These may be used alone or in combination of two or more kinds thereof.

(A-Rf)_{α}ZW_{β} (1)

Rf(ZW_{β})₂ (2)

Z'(Rf-ZW_{β})_{γ} (3)

A-Rf-Q-(Y)_{δ}-B (4)

Rf(Q-(Y)_{δ}-B)₂ (5)

A-Rf-Q-Si(NH)_{3/2} (6)

In formulae (1) to (6), Rf is independently a divalent linear perfluorooxyalkylene polymer residue represented by:
-C_{d}F_{2d}-O-(CF₂O)ₚ(CF₂CF₂O)_{q}(CF₂CF₂CF₂O)ᵣ(CF₂CF₂CF₂CF₂O)ₛ(CF(CF₃)CF₂O)ₜ-C_{d}F_{2d}-, p, q, r, s, and t are each independently an integer of 0 to 200, p+q+r+s+t is 3 to 500, each repeat unit in parentheses to which p, q, r, s, and t are attached may be randomly arranged, d is an integer of 0 to 8 independently for each unit, and the unit with d may be linear or branched. A is independently a fluorine atom, a hydrogen atom, or a monovalent fluorine-containing group whose end is a -CF₃ group, a -CF₂H group, or a -CH₂F group, Z and Z' are each independently a single bond, or a di to octa-valent organic group which may contain a nitrogen atom, an oxygen atom, a silicon atom, a phosphorus atom, or a sulfur atom and may be substituted with fluorine, and W is independently a monovalent organic group having a hydrolyzable group at the end. α and β are each independently an integer of 1 to 7, preferably α is an integer of 1 to 3, more preferably 1, β is an integer of 1 to 3, and α+β is an integer of 2 to 8, preferably an integer of 2 to 4. γ is an integer of 2 to 8, preferably 2 or 3.

Q is independently a single bond or a divalent organic group, δ is each independently an integer of 1 to 10, Y is independently a divalent organic group having a hydrolyzable group, and B is independently a hydrogen atom, a C₁₋₄ alkyl group, or halogen atom.

In formulae (1) to (6), Rf is independently the above-described (poly)fluorooxyalkylene structure (divalent linear perfluorooxyalkylene polymer residue) -C_{d}F_{2d}-O-(CF₂O)ₚ(CF₂CF₂O)_{q}(CF₂CF₂CF₂O)ᵣ(CF₂CF₂CF₂CF₂O)ₛ(CF(CF₃)CF₂O)ₜ-C_{d}F_{2d}-, examples of which are as illustrated above.

In formulae (1), (4), and (6), A is independently a fluorine atom, a hydrogen atom, or a monovalent fluorine-containing group whose end is a -CF₃ group, a -CF₂H group, or a -CH₂F group. Specific examples of the monovalent fluorine-containing group whose end is a -CF₃ group, a -CF₂H group, or a -CH₂F group include -CF₃, -CF₂CF₃, -CF₂CF₂CF₃, -CH₂CF(CF₃)-OC₃F₇, and -CH₂OCF₂CFH-OC₃F₇ groups. As A, particularly, -CF₃, -CF₂CF₃, -CF₂CF₂CF₃, and -CH₂OCF₂CFH-OC₃F₇ groups are preferred.

In formulae (1) to (3), Z and Z' are each independently a single bond, or a di to octa-valent organic group which may contain a nitrogen atom, an oxygen atom, a silicon atom, a phosphorus atom, or a sulfur atom and may be substituted with fluorine. The organic group can be represented by (L)_{α}M (α is an integer of 1 to 7, preferably an integer of 1 to 3, more preferably 1).

Herein L is a single bond, an oxygen atom, a sulfur atom, or a divalent organic group, and in formulae (1) to (3), L in Z is a linking group between Rf group and M group (or W group), and L in Z' is a linking group between M group (or Rf group) and Rf group. The divalent organic group is preferably an unsubstituted or substituted C₂₋₁₂ divalent organic group which may contain one or two or more selected from the group consisting of an amide bond, an ether bond, a carbonyl bond, an ester bond, or a diorganosilylene group such as a dimethylsilylene group, and a group having -Si[OH][(CH₂)_{f}Si(CH₃)₃]- (f is an integer of 2 to 4), more preferably an unsubstituted or substituted C₂₋₁₂ divalent hydrocarbon group which may contain the foregoing structure.

Examples of the unsubstituted or substituted C₂₋₁₂ divalent hydrocarbon group include alkylene groups such as an ethylene group, a propylene group (a trimethylene group or a methylethylene group), a butylene group (a tetramethylene group or a methylpropylene group), a hexamethylene group, and an octamethylene group, arylene groups such as a phenylene group, and combinations of two or more such groups (such as alkylene-arylene groups). In these groups, some or all of carbon-bonded hydrogen atoms may be substituted by halogen atoms such as fluorine and iodine. Among them, unsubstituted or substituted C₂₋₄ alkylene groups or phenylene groups are preferred.

Examples of the divalent organic group of L include groups of the following structure, and combinations of two or more such groups. In the case of L in Z, the left bond is preferably bonded to Rf, and the right bond is preferably bonded to M or W, and in the case of L in Z', the left bond is preferably bonded to Rf, and the right bond is preferably bonded to M. 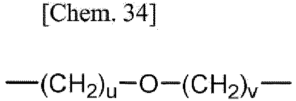 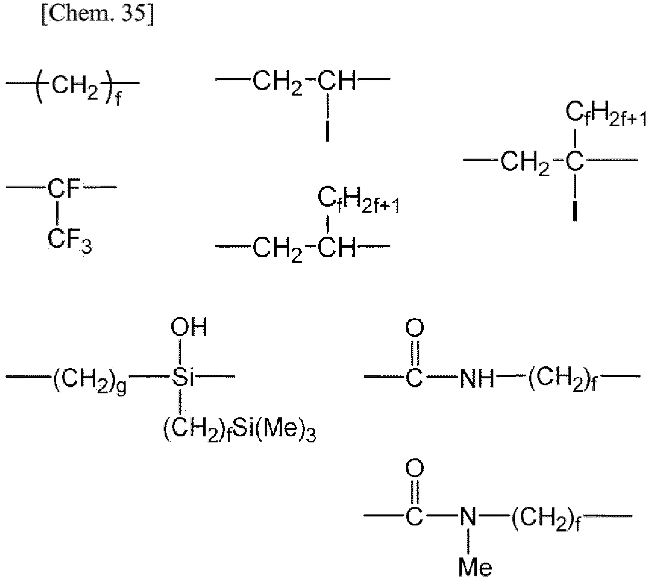 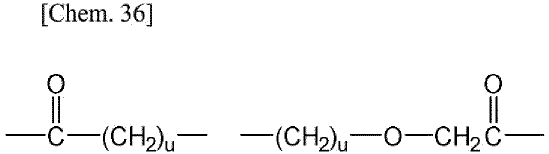 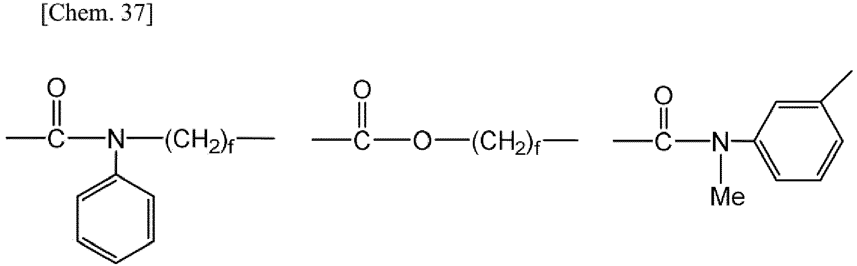 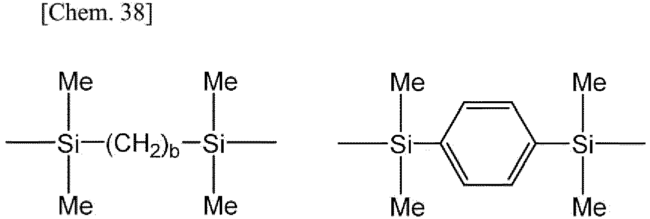 wherein f is an integer of 2 to 4, b is an integer of 2 to 6, preferably an integer of 2 to 4, u and v each are an integer of 1 to 4, g is an integer of 2 to 4, and Me is a methyl group.

M is a single bond, a nitrogen atom, a silicon atom, a carbon atom, a phosphorus atom, or a group containing such atom, or a di to octa-valent, preferably di to tetra-valent (the above-described (α+β)-valent, α is as defined above, β is an integer of 1 to 7, preferably an integer of 1 to 3) organic group. Specifically, M is a single bond, a group selected from a divalent group of -R¹₂C-, a divalent group of -R³₂Si-, a divalent group of -NR⁴-, a divalent group of -N=, a trivalent group of -C(=O)-N=, a trivalent group of -P=, a trivalent group of -PO=, a trivalent group of -R¹C=, a trivalent group of -R³Si=, a tetravalent group of -C=, a tetravalent group of -O-C≡, and a tetravalent group of -Si=, or a di to octa-valent, preferably di to tetra-valent siloxane residue, and in formulae (1) to (3), M in Z is a linking group between L (or Rf group) and W group, and M in Z' is a group to link with Rf group (or between Rf groups) via L.

In the above, R¹ is each independently preferably a C₁₋₃ alkyl group, a hydroxyl group, a group having a repeat unit of a C₁₋₃ oxyalkylene group which may have an intervening diorganosiloxane structure of 2 to 51 silicon atoms, or a silyl ether group of R²₃SiO-, and R² is each independently a hydrogen atom, preferably a C₁₋₃ alkyl group, a C₆₋₁₀ aryl group such as a phenyl group, or a C₁₋₃ alkoxy group. R³ is each independently preferably a C₁₋₃ alkyl group, a C₂ or C₃ alkenyl group, a C₁₋₃ alkoxy group, or a chloro group. R⁴ is a C₁₋₃ alkyl group or a C₆₋₁₀ aryl group such as a phenyl group. When M is a siloxane residue, it preferably has a straight, branched or cyclic organopolysiloxane structure of 2 to 51 silicon atoms, preferably 2 to 13 silicon atoms, more preferably 2 to 11 silicon atoms, even more preferably 2 to 5 silicon atoms. The organopolysiloxane may have an unsubstituted or fluorinated alkyl group of 1 to 8 carbon atoms, more preferably 1 to 4 carbon atoms such as a methyl group, an ethyl group, a propyl group, a butyl group, and C₃F₇-C₃H₆-, or a phenyl group. The organopolysiloxane may also contain silalkylene structure in which two silicon atoms are linked by an alkylene group, that is, Si-(CH₂)ₙ-Si. In the above formula, n is an integer of 2 to 6, preferably an integer of 2 to 4.

The following are exemplary of M defined above. In the case of M in Z, the left bond is preferably bonded to L (or Rf) and the other bonds are preferably bonded to W (in the case of M in Z', all of them are bonded to L (or Rf)). 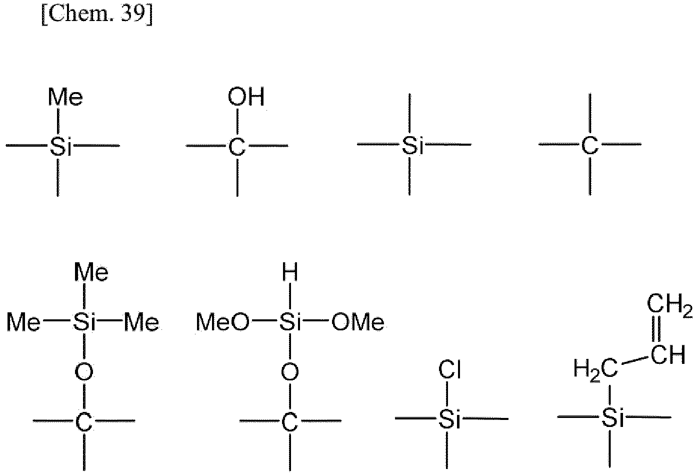 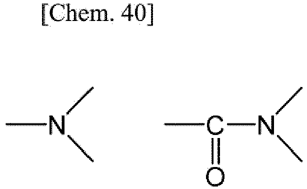 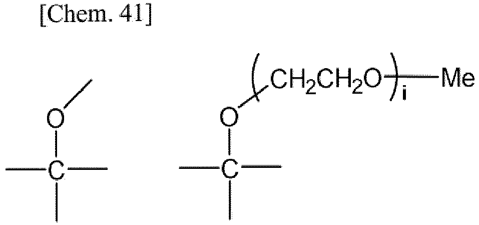 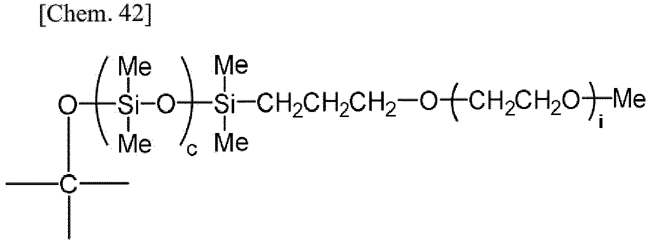 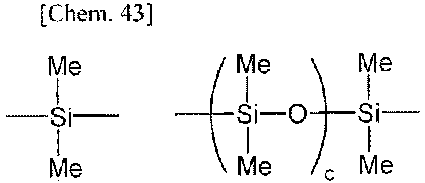 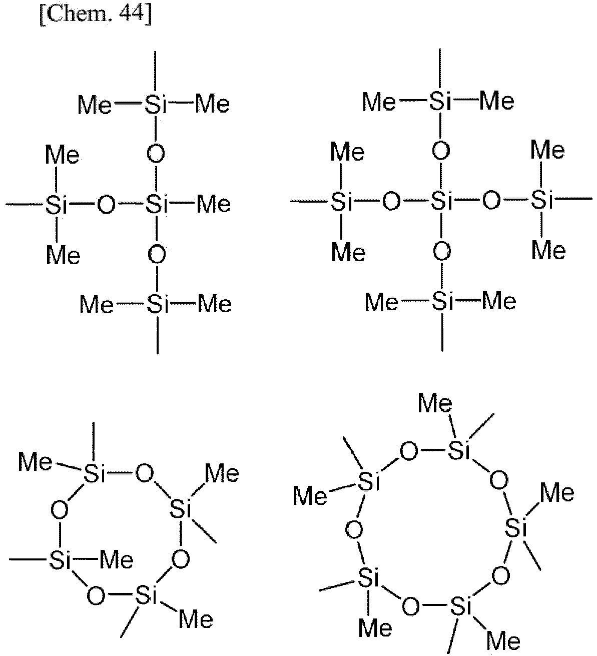 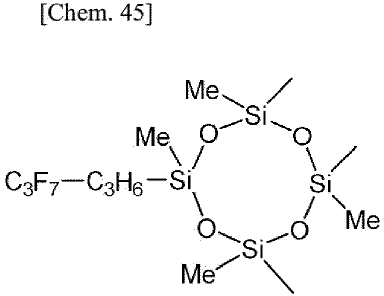 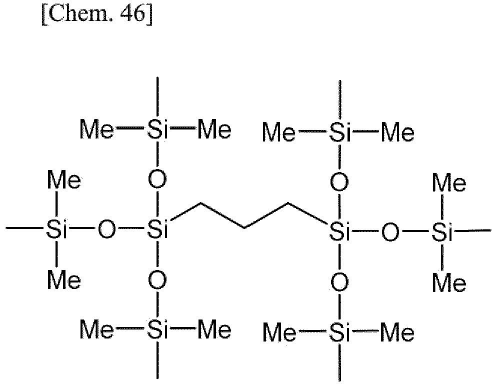 wherein i is an integer of 1 to 20, c is an integer of 1 to 50, and Me is a methyl group.

In formulae (1) to (3), W is independently a monovalent organic group terminated with a hydrolyzable group, preferably represented by the following formula. 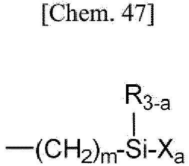 wherein R is a C₁₋₄ alkyl group or a phenyl group, X is independently a hydrolyzable group, a is 2 or 3, and m is an integer of 0 to 10.

In the above formula, examples of the hydrolyzable group X include alkoxy groups of 1 to 12 carbon atoms, especially 1 to 10 carbon atoms such as a methoxy group, an ethoxy group, a propoxy group, and a butoxy group, alkoxyalkoxy groups of 2 to 12 carbon atoms, especially 2 to 10 carbon atoms such as a methoxymethoxy group and a methoxyethoxy group, acyloxy groups of 1 to 10 carbon atoms such as an acetoxy group, alkenyloxy groups of 2 to 10 carbon atoms such as an isopropenoxy group, halogen groups such as a chloro group, a bromo group, and an iodo group, and an amino group. Among them, a methoxy group and an ethoxy group are preferable.

R is a C₁₋₄ alkyl group such as a methyl group or an ethyl group, or a phenyl group, with a methyl group being preferred.

The subscript "a" is 2 or 3, and from the standpoints of reactivity and substrate adhesion, "a" is preferably 3. The subscript m is an integer of 0 to 10, preferably an integer of 2 to 8, more preferably 2 or 3.

In formulae (1) to (3), examples of the structures having (-)_{α}ZW_{β} and -ZW_{β} include the following structures. 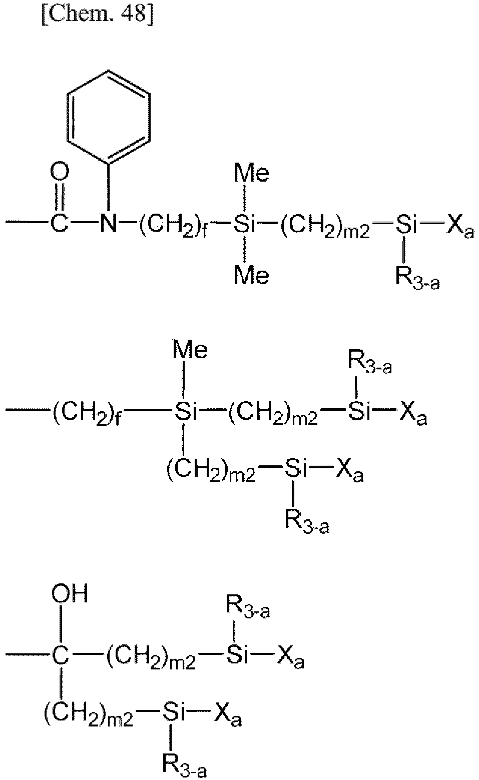 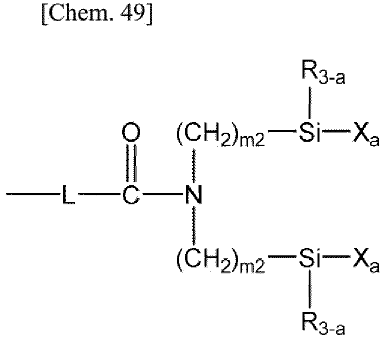 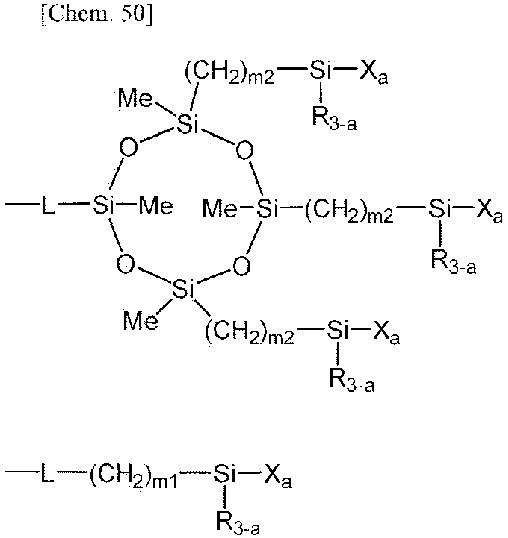 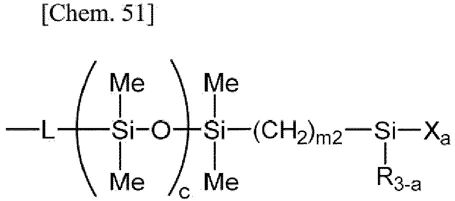 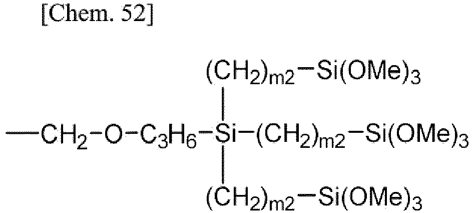 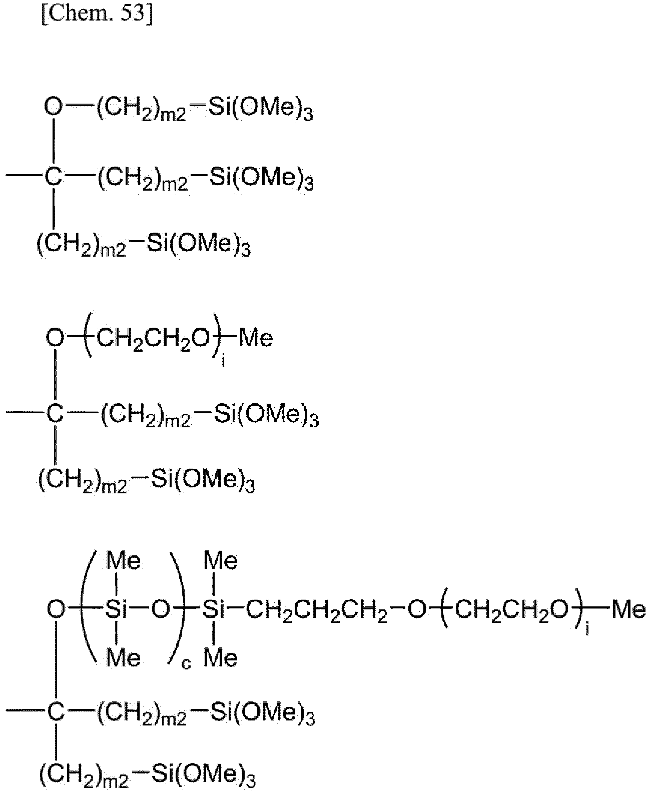 wherein L, R, X, f, c, i, and a are as defined above, m1 is an integer of 0 to 10, preferably an integer of 2 to 8, m2 is an integer of 1 to 10, preferably an integer of 2 to 8, and Me is a methyl group.

In formulae (4), (5), and (6), Q is independently a single bond or a divalent organic group, and is a linking group between Rf group and Y group. The divalent organic group of Q is preferably an unsubstituted or substituted C₂₋₁₂ divalent organic group which may contain one or two or more selected from the group consisting of an amide bond, an ether bond, an ester bond, or a diorganosilylene group such as a dimethylsilylene group, and a group having -Si[OH][(CH₂)_{f}Si(CH₃)₃]- (f is an integer of 2 to 4), more preferably an unsubstituted or substituted C₂₋₁₂ divalent hydrocarbon group which may contain the foregoing structure.

Examples of the unsubstituted or substituted C₂₋₁₂ divalent hydrocarbon group are as exemplified above for the unsubstituted or substituted C₂₋₁₂ divalent hydrocarbon group L.

Examples of the divalent organic group of Q include groups of the following structure. The left bond is preferably bonded to Rf, and the right bond is preferably bonded to Y or a silicon atom. 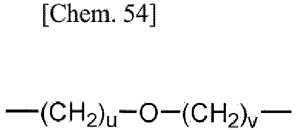 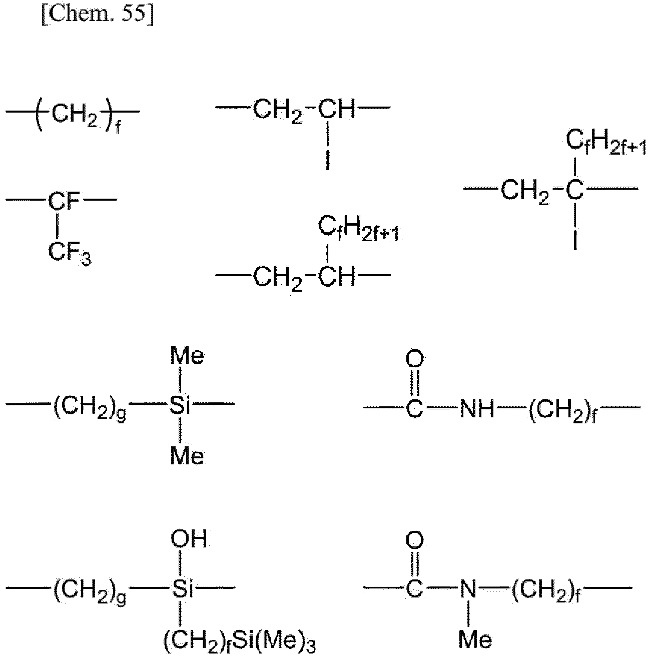 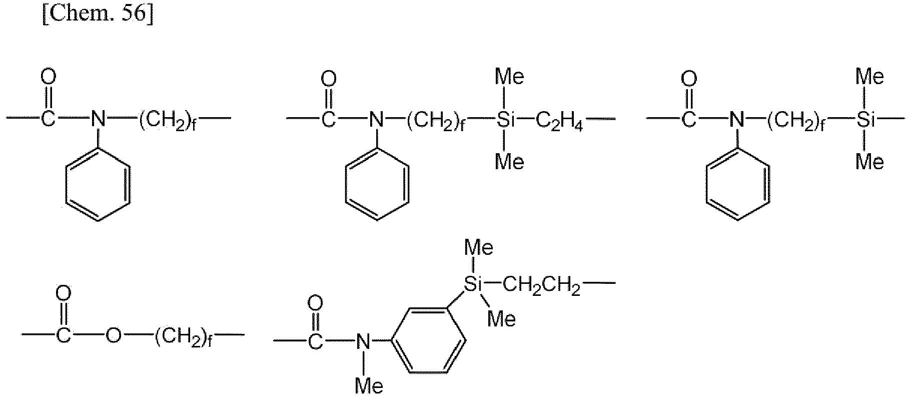 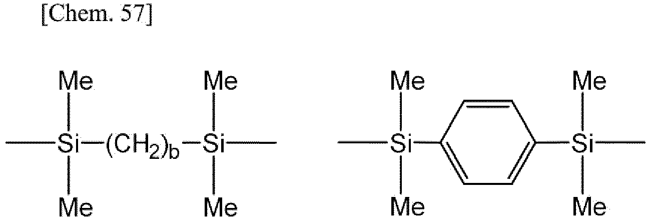 wherein f is an integer of 2 to 4, b is an integer of 2 to 6, preferably an integer of 2 to 4, u and v each are an integer of 1 to 4, g is an integer of 2 to 4, and Me is a methyl group.

In formulae (4) and (5), Y is independently a divalent organic group having a hydrolyzable group, preferably a group having a structure having the following formula. 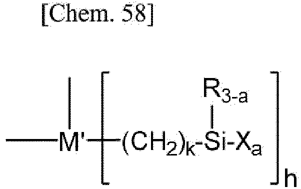 wherein R, X, and a are as defined above; k is an integer of 0 to 10, preferably an integer of 1 to 10, more preferably an integer of 2 to 8; h is an integer of 1 to 6, preferably 1 or 2, M' is an unsubstituted or substituted tri- to octa-valent, preferably tri- or tetra-valent hydrocarbon group, in which some or all of the carbon atoms may be replaced by silicon atoms and some or all of the carbon-bonded hydrogen atoms may be substituted by halogen atoms such as fluorine atoms.

M' is preferably a group having the following structure. It is preferable that the left bond is bonded to Q (or Rf) in the direction, the right bond is bonded to B in the direction, and the other bonds are bonded to units bound by h. 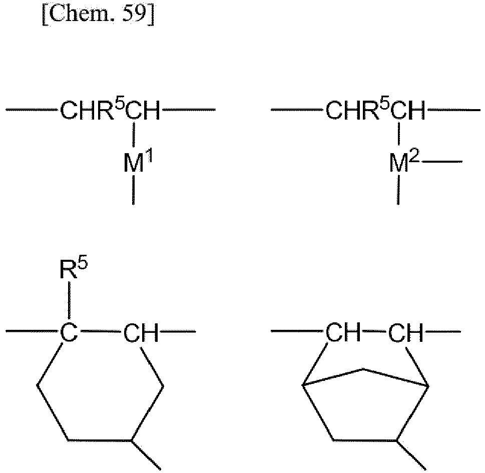 wherein M¹ is a single bond, unsubstituted or substituted C₁₋₆ divalent hydrocarbon group, or diorganosilylene group such as a dimethylsilylene group, and M² is a trivalent group of -R¹C= or a trivalent group of -R³Si=, and R¹ and R³ are as defined above; and R⁵ is a hydrogen atom or a monovalent hydrocarbon group, typically a C₁₋₆ alkyl group such as a methyl group, an ethyl group, or a propyl group.

Examples of M¹ include a single bond, a phenylene group, a dimethylsilylene group, and a tetrafluoroethylene group. The following are exemplary of M². 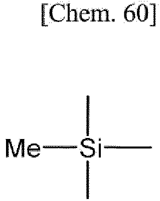 wherein Me is a methyl group.

Examples of such Y include the following groups. It is preferable that the left bond is bonded to Q (or Rf) in the direction, and the right bond is bonded to B in the direction. 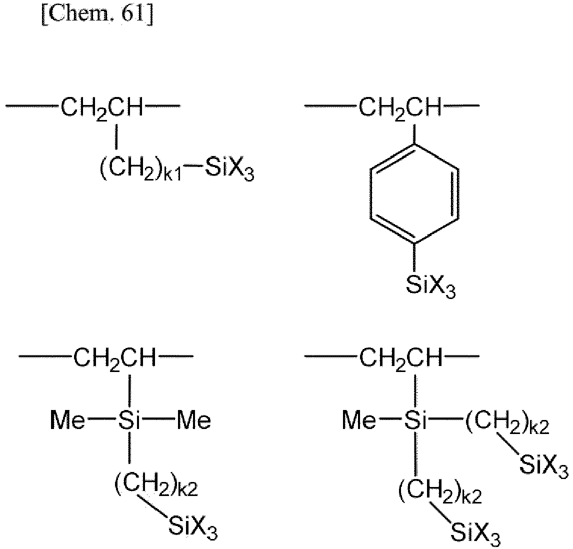 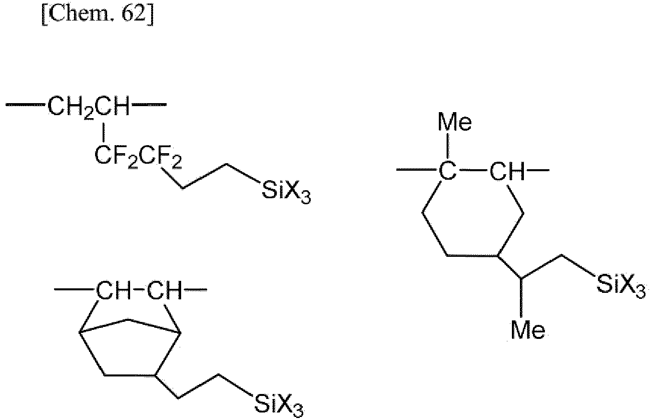 wherein X is as defined above, k1 is an integer of 0 to 10, preferably an integer of 1 to 8, k2 is an integer of 2 to 10, preferably an integer of 2 to 8, and Me is a methyl group.

In formulae (4) and (5), δ is each independently an integer of 1 to 10, preferably an integer of 1 to 4.

B is independently a hydrogen atom, C₁₋₄ alkyl groups such as a methyl group, an ethyl group, a propyl group, and a butyl group, or halogen atoms such as a fluorine atom, a chlorine atom, a bromine atom, and an iodine atom.

Examples of the fluorooxyalkylene group-containing organosilane compound, the fluorooxyalkylene group-containing organosiloxane compound, and the fluorooxyalkylene group-containing polysilazane compound (fluorine-containing organosilicon compound) having formulae (1) to (6) include the structures shown below. 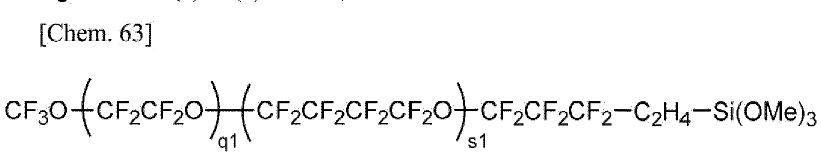 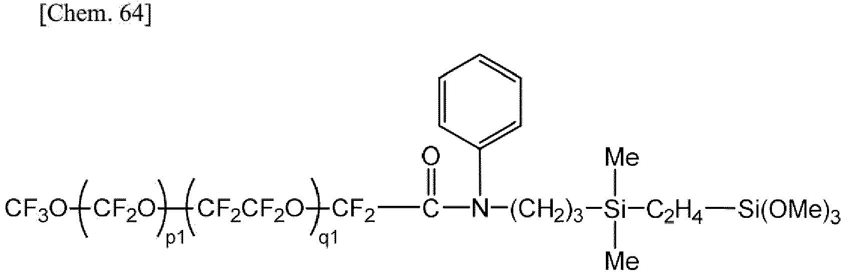 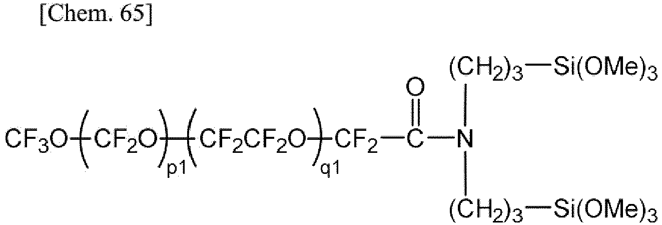 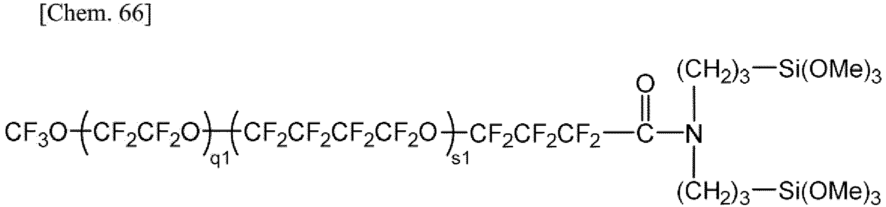 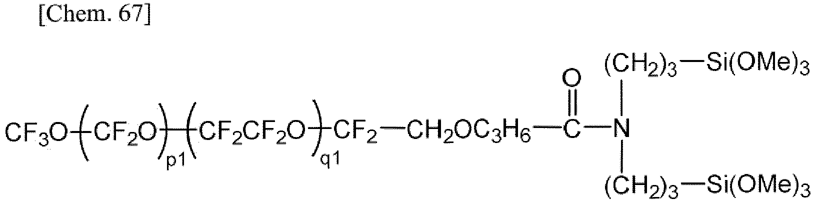 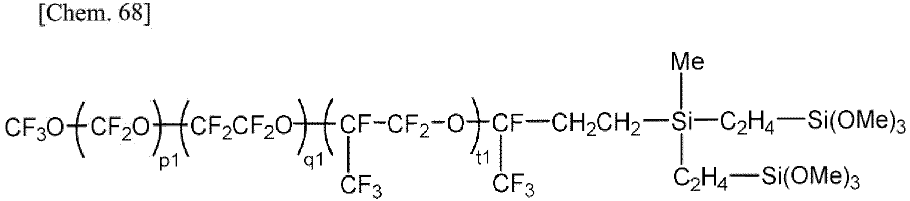 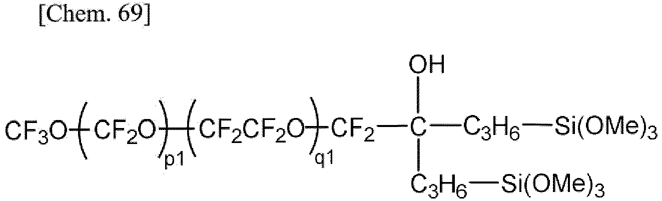 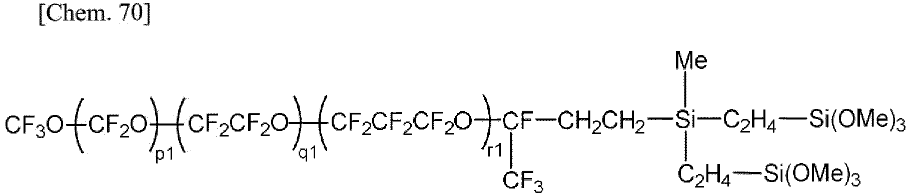 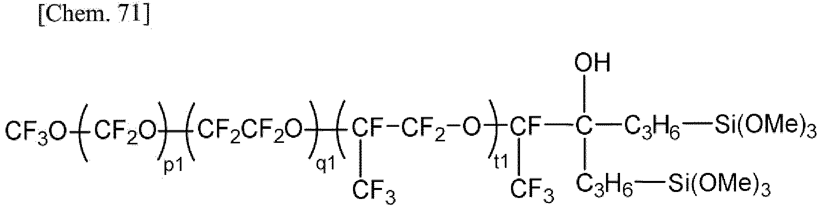 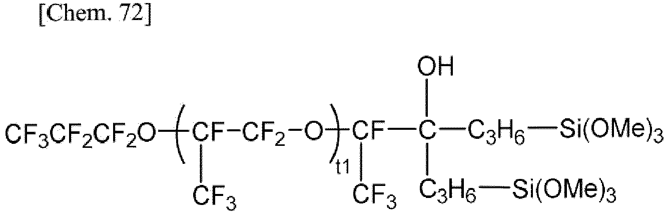 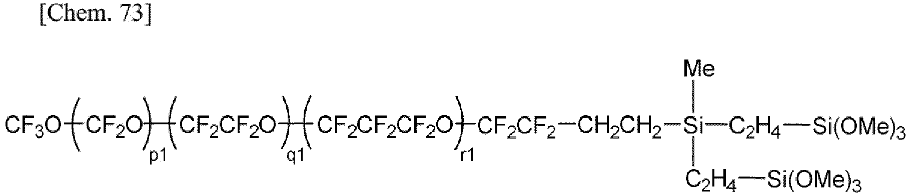 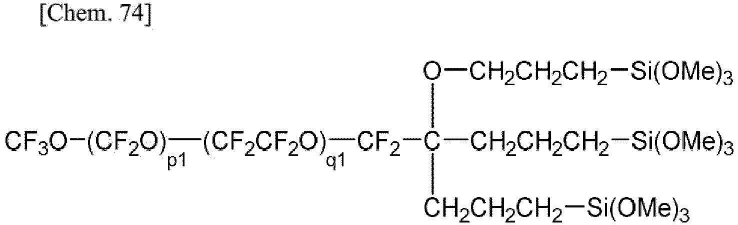 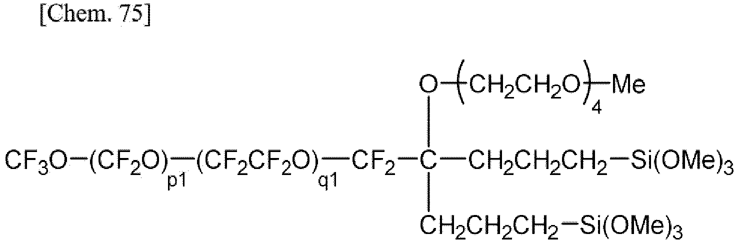 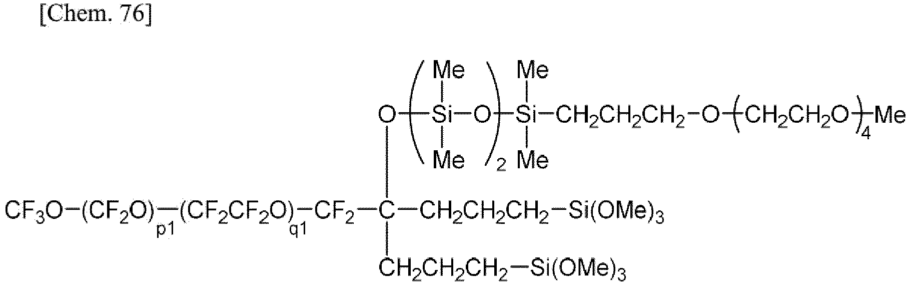 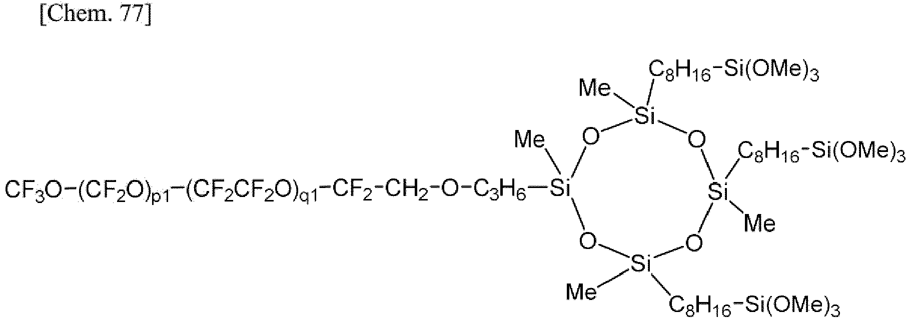 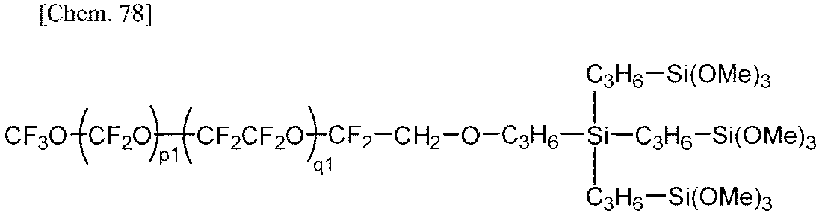 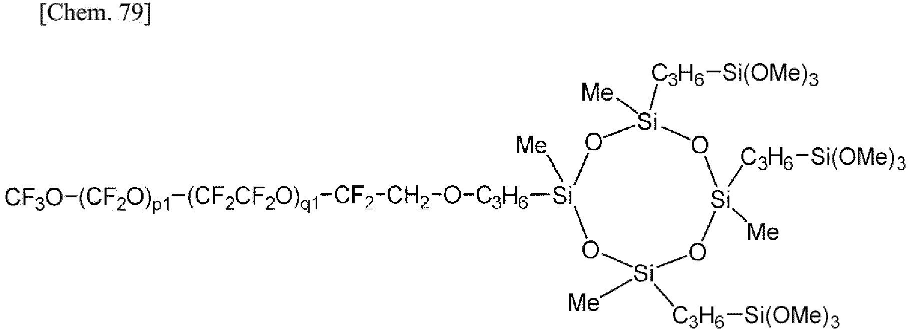 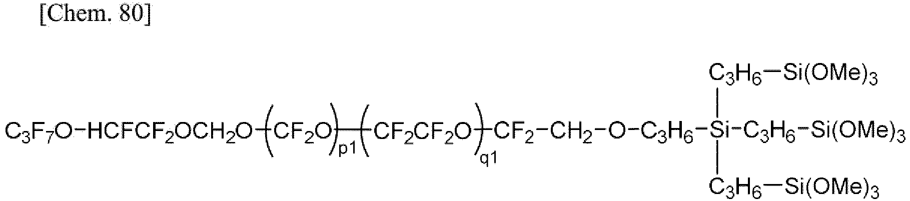 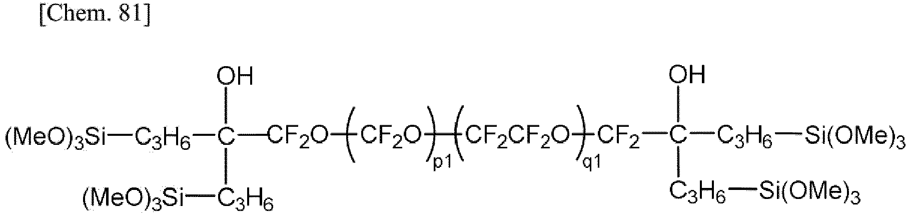 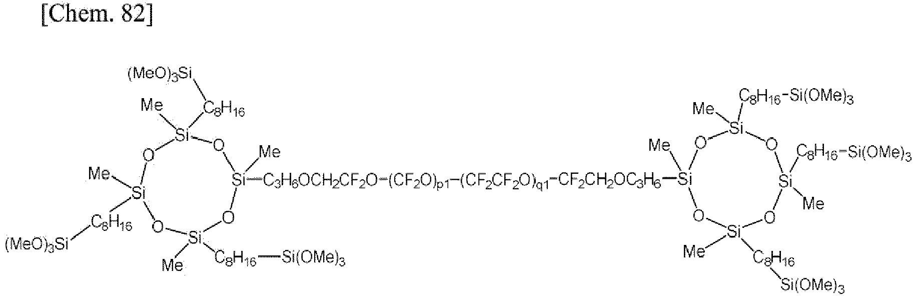 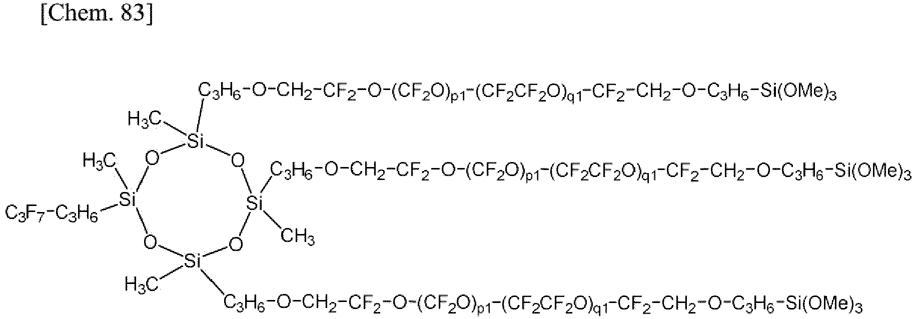 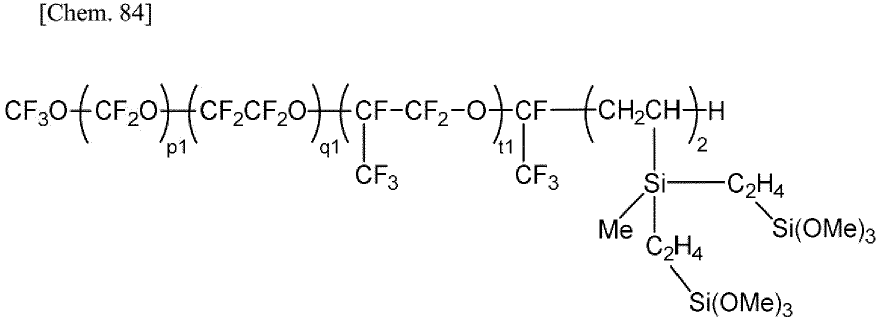 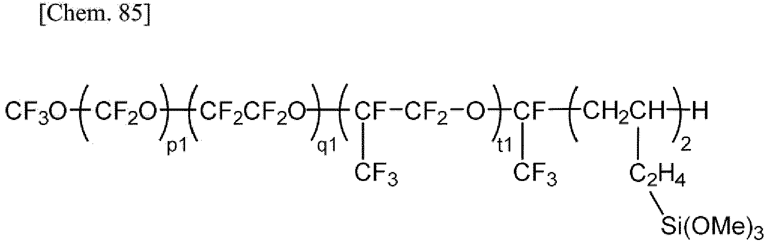 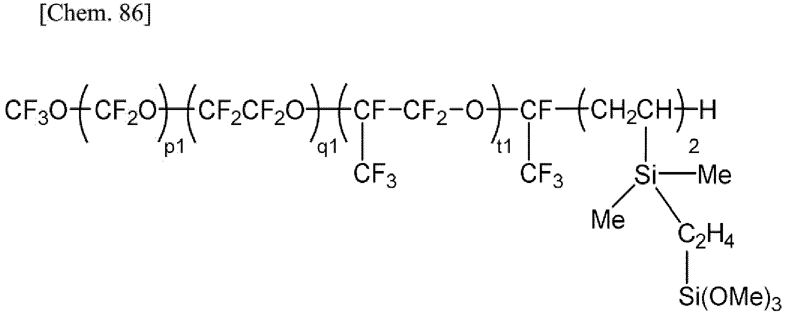 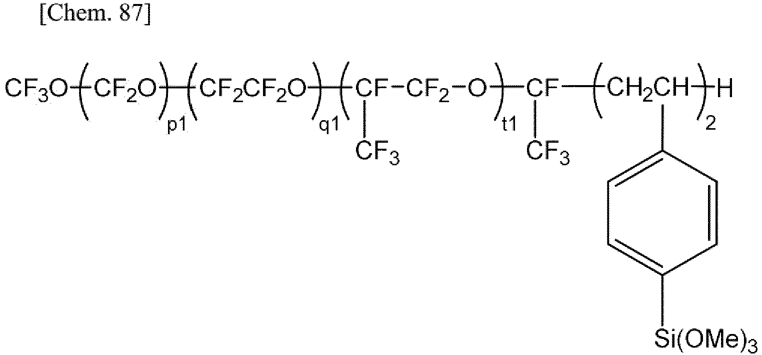 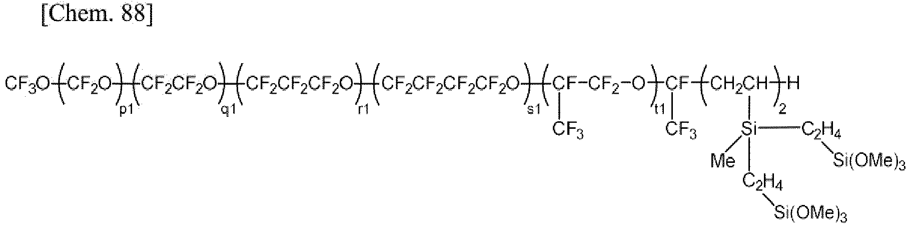 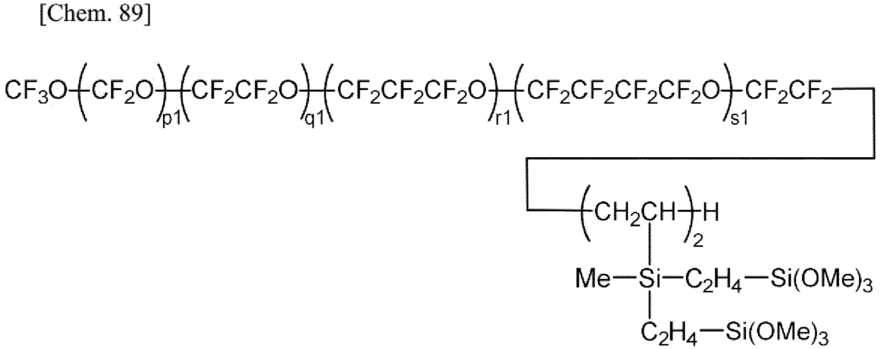 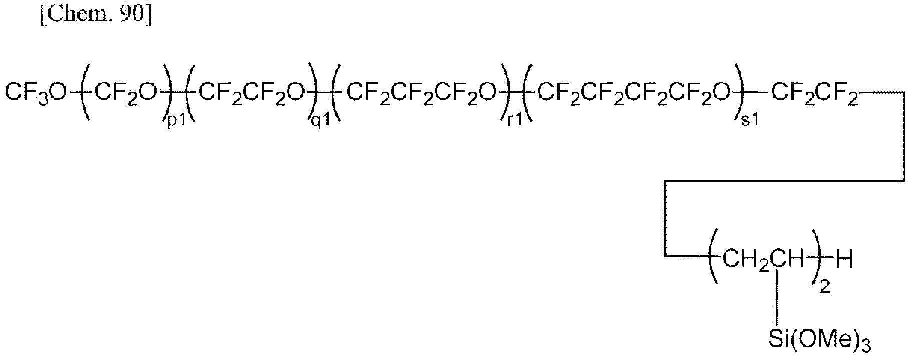 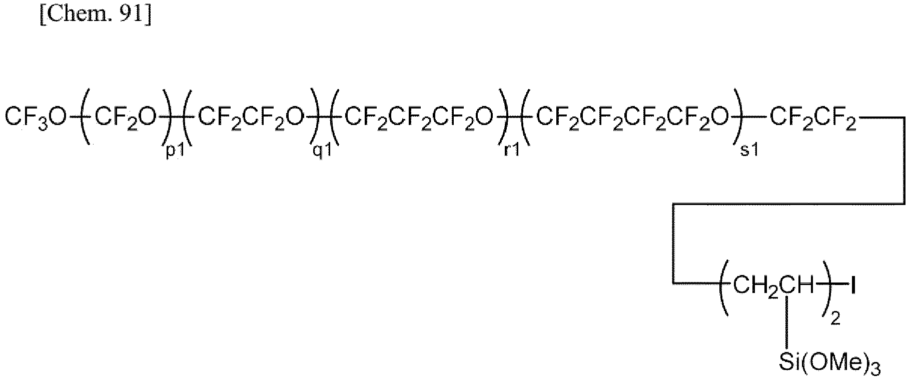 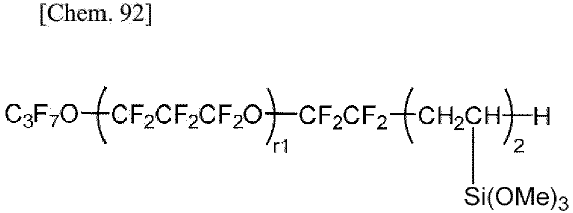 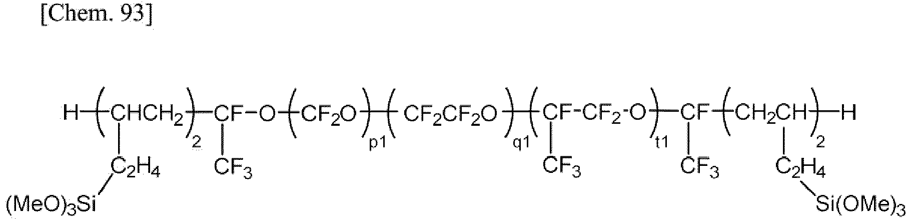 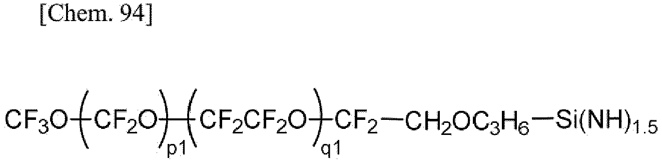 wherein Me is a methyl group, p1, q1, r1, s1, and t1 are each independently an integer of 1 to 200, the sum of p1, q1, r1, s1, and t1 is 3 to 500, and each repeat unit in parentheses to which p1, q1, r1, s1, and t1 are attached may be randomly arranged.

The fluorooxyalkylene group-containing organosilane compound and the fluorooxyalkylene group-containing organosiloxane compound (fluorine-containing organosilicon compound) having general formulae (1) to (5) according to the present invention may contain such compounds in which some or all of the hydrolyzable groups (X) are hydrolyzed (compound in which X is an OH group), and may further contain such compounds in which some or all of the OH groups are condensed.

The water/oil repellent layer (second layer) to be formed/deposited on the outer surface of the primer layer can be formed/deposited by, for example, wet coating a solution (water/oil repellent agent) containing the fluorine-containing organosilicon compound onto the outer surface of the formed primer layer (first layer) or dry containing the fluorine-containing organosilicon compound or a mixture containing the fluorine-containing organosilicon compound and curing the fluorine-containing organosilicon compound.

The water/oil repellent agent or the mixture containing the fluorine-containing organosilicon compound (hereinafter, also referred to as the mixture) may further contain a fluorine-containing organosilicon compound having the following formula (X) (non-functional perfluoropolyether polymer) as necessary, in addition to the above-described fluorine-containing organosilicon compound as a principal component.

A-Rf-A (X)

wherein A and Rf are as defined above.

In formula (X), A and Rf may be the same as A and Rf exemplified in formulae (1) to (6), and these A and Rf may be the same as or different from A and Rf in formulae (1) to (6).

Examples of the non-functional polymer having formula (X) include the following polymers. 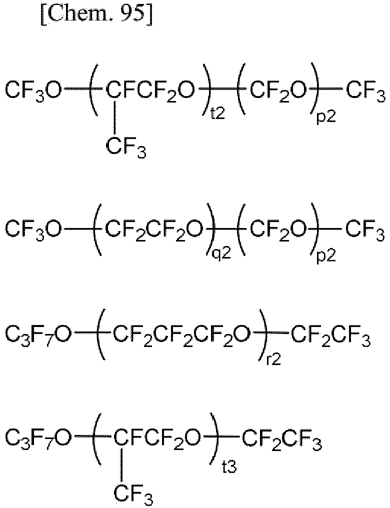 wherein p2, q2, and t2 are each independently an integer of 1 to 200, the sum of p2, q2, and t2 is 3 to 400, and r2 and t3 are each an integer of 3 to 200; and each repeat unit in parentheses to which p2, q2, and t2 are attached may be randomly arranged.

The content of the fluorine-containing organosilicon compound having the formula (X) (non-functional perfluoropolyether polymer) may be 0 to 100 parts by weight, preferably 0 to 60 parts by weight, more preferably about 0 to 1 part by weight per 100 parts by weight of the fluorine-containing organosilicon compound as a principal component.

The water/oil repellent agent or the mixture may contain an unreacted raw material or a reaction intermediate before introducing a terminal hydroxyl group or a hydrolyzable group into the fluorine-containing organosilicon compound as a principal component. The water/oil repellent agent or the mixture may contain a partial (hydrolytic) condensate obtained by condensing a terminal hydroxyl group of the fluorine-containing organosilicon compound (fluoropolyether group-containing polymer having a terminal hydroxyl group or a hydrolyzable group) as a principal component or a hydroxyl group obtained by partially hydrolyzing a terminal hydrolyzable group in advance by a known method.

In addition to the above-described fluorine-containing organosilicon compound as a principal component, a hydrolytic condensation catalyst, for example, an organotin compound (such as dibutyltin dimethoxide or dibutyltin dilaurate), an organotitanium compound (such as tetra-n-butyl titanate), an organic acid (such as acetic acid, methanesulfonic acid, or fluorine-modified carboxylic acid), and an inorganic acid (such as hydrochloric acid or sulfuric acid) may be further added to the water/oil repellent agent or the mixture as necessary. Among them, acetic acid, tetra-n-butyl titanate, dibutyltin dilaurate, fluorine-modified carboxylic acid, and the like are particularly desirable. The content of the hydrolytic condensation catalyst may be a catalyst amount, and usually may be about 0.01 to 5 parts by weight, particularly about 0.1 to 1 part by weight per 100 parts by weight of the fluorine-containing organosilicon compound as a principal component.

In the water/oil repellent agent or the mixture, the optional component that can be blended as necessary can be blended within a range in which the content of the cured product of the fluorine-containing organosilicon compound in the resulting water/oil repellent layer (second layer) is 50 wt% or more (50 to 100 wt%), preferably 51 to 100 wt%, more preferably 75 to 100 wt%, still more preferably 95 to 100 wt%.

In the case of using the water/oil repellent agent, it is desirable to dilute previously the fluorine-containing organosilicon compound with a solvent, and such a solvent is not particularly limited as long as it uniformly dissolves the fluorine-containing organosilicon compound. Examples thereof include fluorine-modified aliphatic hydrocarbon-based solvents (such as perfluoroheptane and perfluorooctane), fluorine-modified aromatic hydrocarbon-based solvents (such as 1,3-trifluoromethylbenzene), fluorine-modified ether-based solvents (such as methyl perfluorobutyl ether, ethyl perfluorobutyl ether, and perfluoro(2-butyltetrahydrofuran)), fluorine-modified olefin-based solvents (such as cis-1-chloro-3,3,3-trifluoropropene and methoxyperfluoroheptene), fluorine-modified alkylamine-based solvents (such as perfluorotributylamine and perfluorotripentylamine), hydrocarbon-based solvents (such as petroleum benzine, toluene, and xylene), and ketone-based solvents (such as acetone, methyl ethyl ketone, and methyl isobutyl ketone). Of these, fluorine-modified solvents are desirable for solubility and stability, and fluorine-modified ether-based solvents and fluorine-modified aromatic hydrocarbon-based solvents are especially preferred.

The solvent may be used alone or in admixture of two or more kinds thereof.

The solvent is preferably used in such amounts that the concentration of the fluorine-containing organosilicon compound may fall in a range of 0.01 to 50 wt%, preferably 0.03 to 10 wt%, still more preferably 0.05 to 1 wt% of the water/oil repellent agent (solution containing the fluorine-containing organosilicon compound and, if necessary, other components and a solvent).

The water/oil repellent agent containing the fluorine-containing organosilicon compound can be applied to a substrate by any known processes such as wet coating processes (dipping, brush coating, spin coating, spraying, gravure coating, die coating, bar coating, and slit coating), and the fluorine-containing organosilicon compound or the mixture containing the fluorine-containing organosilicon compound can be applied to a substrate by any known processes such as evaporation. Although coating and other conditions may accord with the prior art well-known process, it is efficient that the water/oil repellent agent containing the fluorine-containing organosilicon compound is deposited by the wet coating process (wet process) because the primer layer is deposited by the wet coating process (wet process).

The fluorine-containing organosilicon compound can be cured at room temperature (25°C) for 1 to 24 hours, but may be heated at 30 to 200°C for 1 minute to 1 hour in order to cure the compound in a shorter time. Cure under humid conditions (RH 50 to 90%) is preferred for accelerating hydrolysis.

It is noted that the surface of the primer layer on the substrate may be cleaned or activated by plasma treatment, UV treatment, ozone treatment, or the like before the water/oil repellent agent containing the fluorine-containing organosilicon compound or the like is coated thereon.

The thickness of the fluorinated layer (water/oil repellent layer) of the water/oil repellent member of the present invention is 0.5 to 50 nm, particularly preferably 1 to 25 nm. If the layer is too thick, the anti-microbial, anti-mold, and anti-viral properties of the outer surface of the water/oil repellent layer may be insufficient, and if the layer is too thin, surface properties and abrasion resistance may be insufficient.

The water/oil repellent member of the present invention obtained in this manner is suitably used for a building member, kitchen member, furniture, electronic equipment, a transportation device, sanitary ware, and the like, and specific examples of the use thereof include housings of navigation systems, PC tablets, PCs, smartphones, smartwatches, digital cameras, digital video cameras, PDAs, portable audio players, car audio players, video game consoles, TVs, toys, and the like; lenses such as camera lenses, eyeglass lenses, sunglasses, AR lenses, and VR lenses; medical instruments such as gastroscopes, surgical knives, blood pressure gauges, X-ray CT, MRI, inspection equipment, and beds; surfaces of liquid crystal displays, organic EL displays, LED displays, flexible devices, and the like; protective films; antireflective films; optical articles such as compact disks, DVDs, and Blu-ray disks; windows, bodies, operating devices, chairs, safety belts, and the like of automobiles, buses, trains, aircraft, ships, drones, and the like; building exterior members; kitchen building members; waiting rooms; mirrors; and surfaces of art works.

### EXAMPLES

Hereinafter, the present invention is specifically described with reference to Examples and Comparative Examples, but the present invention is not limited thereto. In the following Examples, the mean particle size is a value determined as a cumulative weight average value D50 (or median diameter) using a particle size distribution measuring apparatus by a laser diffraction method. Me represents a methyl group.

### [Examples 1 to 8 and Comparative Examples 1 to 9]

As described below, specimens of a water/oil repellent member having a substrate, a primer layer, and a water/oil repellent layer were prepared.

### [Substrate]

Glass substrate (Gorilla 3 Glass manufactured by Corning Incorporated, specimen substrate of 0.5 mm thickness, 50 mm width, 100 mm length)

### [Formation of primer layer]

Each primer layer was formed on the substrate by the following method.

As the silicon-compound-based binder, Scutum S (manufactured by Shin-Etsu Chemical Co., Ltd.) which is a water-soluble silicate was used to prepare the following Primers 1 and 2.

### [Primer 1]

A mixture of rutile-type titanium oxide (mean particle size 10 nm), silver microparticles (mean particle size 20 nm), and silicate at a weight ratio of 5 : 2 : 5 was used as Primer 1.

### [Primer 2]

A mixture of anatase-type titanium oxide (mean particle size 15 nm) and silicate at a weight ratio of 1 : 1 was used as Primer 2.

### [Formation of Primer layer 1]

A treating liquid obtained by diluting Primer 1 with pure water in a concentration of 0.1 wt% as solids was spray-coated onto the substrate using a spray coater (NST-51 manufactured by T&K Co., Ltd.) and then dried at room temperature (25°C) for 12 hours to form Primer layer 1 having a thickness of about 20 nm on the outer surface of the substrate.

### [Formation of Primer layer 2]

A treating liquid obtained by diluting Primer 1 with pure water in a concentration of 0.7 wt% as solids was spray-coated onto the substrate using a spray coater (NST-51 manufactured by T&K Co., Ltd.) and then dried at room temperature (25°C) for 12 hours to form Primer layer 2 having a thickness of about 100 nm on the outer surface of the substrate.

### [Formation of Primer layer 3]

A treating liquid obtained by diluting Primer 1 with pure water in a concentration of 0.7 wt% as solids was spray-coated onto the substrate using a spray coater (NST-51 manufactured by T&K Co., Ltd.) and then dried at room temperature (25°C) for 12 hours. This operation was repeated three times to form Primer layer 3 having a thickness of about 500 nm on the outer surface of the substrate.

### [Formation of Primer layer 4]

A treating liquid obtained by diluting Primer 2 with pure water in a concentration of 0.7 wt% as solids was spray-coated onto the substrate using a spray coater (NST-51 manufactured by T&K Co., Ltd.) and then dried at room temperature (25°C) for 12 hours. This operation was repeated three times to form Primer layer 4 having a thickness of about 500 nm on the outer surface of the substrate.

### [Formation of Primer layer 5]

A treating liquid obtained by diluting Scutum S with pure water in a concentration of 0.5 wt% as solids was spray-coated onto the substrate using a spray coater (NST-51 manufactured by T&K Co., Ltd.) and then dried at room temperature (25°C) for 1 hour to form Primer layer 5 having a thickness of about 100 nm on the outer surface of the substrate.

### [Formation of Primer layer 6]

A treating liquid obtained by diluting a hydrolytic partial condensate of tetraethoxysilane (weight average molecular weight: 25,000, silanol content: 0.015 mol/g) with butanol in a concentration of 1.5 wt% as solids was dip-coated on the substrate (dipping the substrate in the treating liquid for 60 seconds and then pulling up at 150 mm/min), and dried at room temperature (25°C) for 1 hour to form Primer layer 6 having a thickness of 62 nm on the outer surface of the substrate.

### [Formation of Primer layer 7]

A treating liquid obtained by diluting perhydropolysilazane with dibutyl ether in a concentration of 2.0 wt% as solids was dip-coated on the substrate (dipping the substrate in the treating liquid for 30 seconds and then pulling up at 150 mm/min), and cured at 80°C/80% RH for 24 hours to form Primer layer 7 having a thickness of 95 nm on the outer surface of the substrate.

### [Formation of Primer layer 8]

A treating liquid obtained by diluting silica having an average particle size of 10 nm in a concentration of 1.0 wt% as solids was dip-coated on the substrate (dipping the substrate in the treating liquid for 60 seconds and then pulling up at 150 mm/min), and dried at 150°C for 1 hour to form Primer layer 8 having a thickness of 62 nm on the outer surface of the substrate.

### [Formation of Primer layer 9]

An organic antibacterial agent (San-ai zol 200, zinc pyrithione-based organic antibacterial agent) was dip-coated on the substrate (dipping the substrate in the treating liquid for 60 seconds and then pulling up at 150 mm/min), and dried at room temperature (25°C) for 1 hour to form Primer layer 9 having a thickness of 50 nm on the outer surface of the substrate.

The water/oil repellent layer was formed/deposited by the following method on the outer surface of the primer layer of the substrate on which each of Primer layers 1 to 9 was formed.

### [Formation of water/oil repellent layer]

Each of Compounds 1 to 5 shown below was diluted with a fluorochemical solvent (Novec 7200 (manufactured by 3M, ethyl perfluorobutyl ether)) in a concentration of 0.1 wt% as solids, and then the dilution was spray coated onto each primer layer of the substrate using a spray coater (NST-51 manufactured by T&K Co., Ltd.). Thereafter, the coating was cured at 80°C for 30 minutes to form a cured film (water/oil repellent layer), yielding a specimen. The thickness of the water/oil repellent layer in each specimen was calculated from the F content detected by an X-ray fluorescence analyzer (ZSXmini2 manufactured by Rigaku Corp.).

Compound 6 shown below was diluted with ion-exchanged water in a concentration of 10 wt%, and then the dilution was coated onto the primer layer of the substrate with a wire bar. Thereafter, the coating was cured at 100°C for 20 minutes to form a cured film (water/oil repellent layer), yielding a specimen. The thickness of the water/oil repellent layer in the specimen was calculated from the F content detected by an X-ray fluorescence analyzer (ZSXmini2 manufactured by Rigaku Corp.). 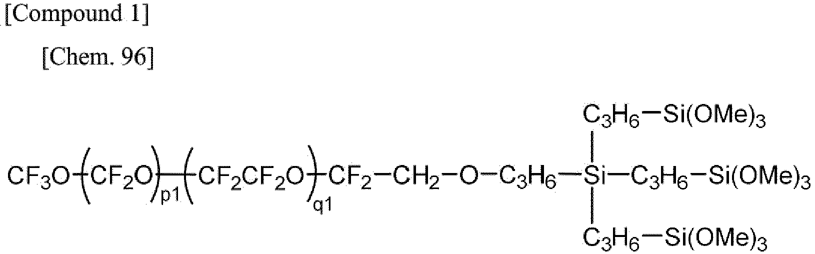 (p1+q1 = 60, p1 : q1 = 23 : 22) 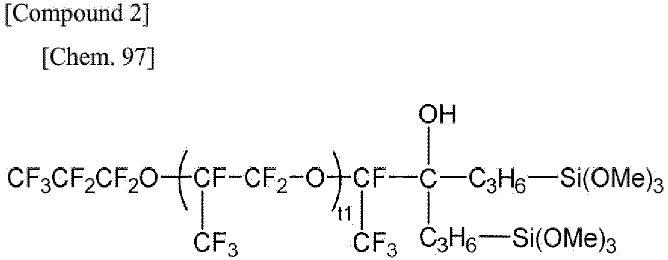 (t1 = 30) 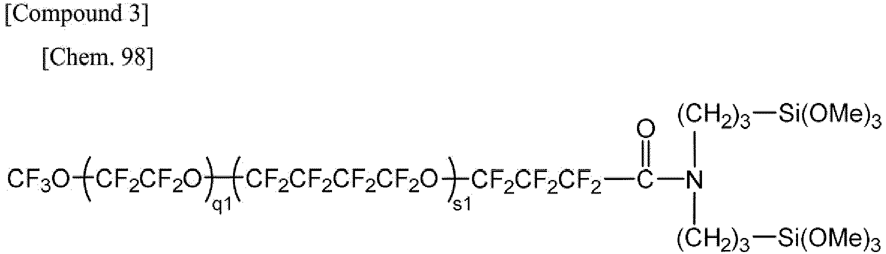 (q1+s1 = 30, s1 : q1 = 10 : 10) 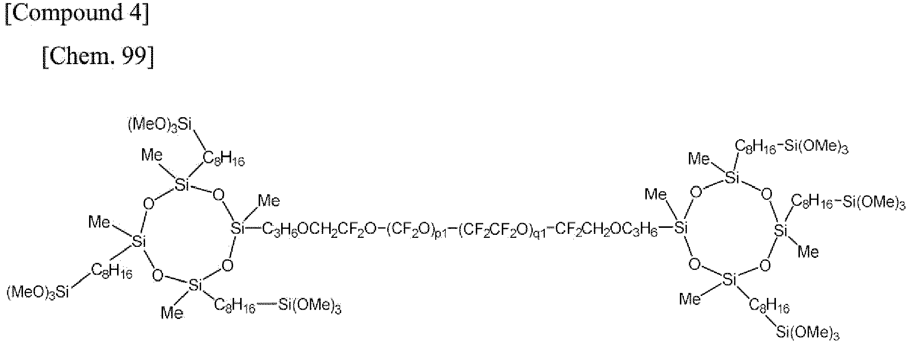 (p1+q1 = 48, p1 : q1 = 10 : 10) 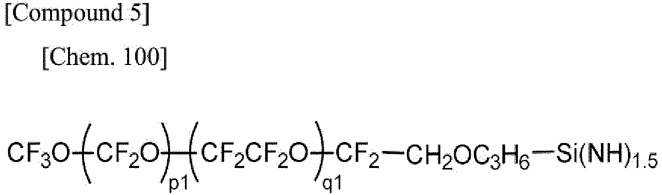 (p1+q1 = 10, p1 : q1 = 10 : 9)

### [Compound 6]

ZEFFLE SE-310 (manufactured by Daikin Industries, Ltd., mixture of polyvinylidene fluoride and polymethyl methacrylate, pH 7 to 8, anionic/nonionic)

In Comparative Examples 6 and 8, a water/oil repellent layer was not provided. In Comparative Example 9, a water/oil repellent layer was formed directly on a glass substrate by the above method without forming a primer layer. The primer layer used in each of Examples and Comparative Examples, the compound used in the water/oil repellent layer, and the thicknesses of the primer layer and the water/oil repellent layer are shown in Table 1. The thickness of the primer layer is a value measured by a microspectrometric film thickness meter OPTM-A1 (Otsuka Electronics Co., Ltd.).

Using the specimen obtained above, various properties were evaluated by the following methods. The results are shown in Table 1.

### [Anti-microbial property]

As for anti-microbial performance, the specimens obtained as described above were tested by a method in accordance with Japanese Industrial Standard JIS Z 2801:2010 "Antibacterial products-Test for antibacterial activity and efficacy", and evaluated according to the following criteria.

| | |
|---|---|
| • Good (indicated as "○"): | When the antibacterial activity value is 2.0 or more |
| • Poor (indicated as "×"): | When the antibacterial activity value is less than 2.0 |

### [Anti-mold property]

As for anti-mold performance, the specimens obtained as described above were evaluated by a method in accordance with Japanese Industrial Standard JIS Z 2911:2010 "Methods of test for fungus resistance" until after 8 weeks. The evaluation was performed by evaluating the mold growth state specified in Annex A, and was evaluated according to the following criteria.

| | |
|---|---|
| • Very good (indicated as "⊚"): | The mold growth state is 0 to 1 |
| • Good (indicated as "○"): | The mold growth state is 2 to 3 |
| • Poor (indicated as "×"): | The mold growth state is 4 to 5 |

### [Anti-viral property]

As for anti-viral performance, the specimens obtained as described above were tested by a method in accordance with Japanese Industrial Standard JIS R 1706:2020 "Fine ceramics (advanced ceramics, advanced technical ceramics) - Determination of antiviral activity of photocatalytic materials - Test method using bacteriophage Qβ", and evaluated according to the following criteria.

| | |
|---|---|
| • Good (indicated as "○"): | When the antiviral activity value is 1.0 or more |
| • Poor (indicated as "×"): | When the antiviral activity value is less than 1.0 |

### [Water/oil-repellent property]

The contact angle with water and the contact angle with oleic acid of the cured film (water/oil repellent layer) of the specimen were measured using a contact angle meter (DropMaster, manufactured by Kyowa Interface Science Co., Ltd.).

### [Abrasion resistance test]

Using a both-way wear tester (HEIDON 30S, manufactured by Shinto Scientific Co., Ltd.), an abrasion resistance test was carried out on the cured film (water/oil repellent layer) of the specimen under the following conditions. The cured film (water/oil repellent layer) after the abrasion resistance test was measured for a contact angle with water using a contact angle meter (DropMaster, manufactured by Kyowa Interface Science Co., Ltd.).

### Evaluation environmental conditions:

| | |
|---|---|
| | 25°C, humidity 40% |
| Rubbing member: | Tip portion (20 mm × 20 mm) of the tester to come in contact with the sample was wrapped with 8 stacked non-woven fabric sheets (BEMCOT M-3II, manufactured by Asahi Kasei Corp.), which was secured by rubber band. |
| Load: | 1 kg |
| Rubbing distance (one way): | 40 mm |
| Rubbing speed: | 4,800 mm/min |
| Reciprocation: | 3,000 cycles |

### [Dynamic friction coefficient]

Using a surface property tester manufactured by Shinto Scientific Co., Ltd., the cured film (water/oil repellent layer) of the specimen was measured for a dynamic friction coefficient with fabric Bemcot (manufactured by Asahi Kasei Corp.) under the following conditions.

| | |
|---|---|
| Contact area: | 10 mm × 30 mm |
| Load: | 100 g |

### [Sebum stain wipe-off]

Seven panelists transferred sebum on their forehead to the surface of the cured film (water/oil repellent layer) of the specimen with the finger, wiped the film surface with fabric Bemcot (manufactured by Asahi Kasei Corp.), and evaluated wipe-off according to the following criteria.
A: Complete wipe-off within 2 strokes
B: Complete wipe-off within 3 to 5 strokes
C: Some residues after 5 stroke wipe-off
D: Little wipe-off after 5 strokes

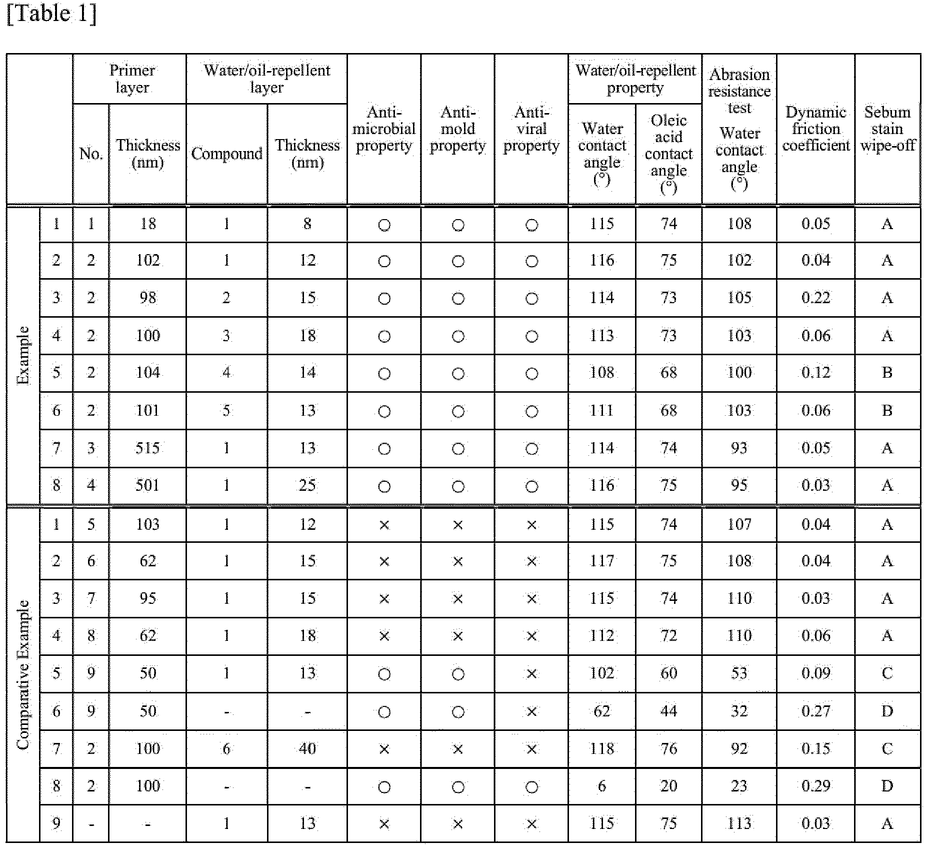

As is evident from the results in Table 1, Examples 1 to 8 exhibited excellent sebum stain wipe-off and sufficient anti-microbial, anti-mold, and anti-viral properties of the primer layer because of high water/oil-repellent property of the outer surface of the water/oil repellent layer. It is considered that since the water/oil repellent layer is thin and the molecular chain has good mobility, the anti-microbial, anti-mold, and anti-viral properties of the primer layer exert an effect on bacteria and mold adhering to the surface of the water/oil repellent layer. In Comparative Examples 1 to 4, a general primer for imparting a water/oil repellent layer was used, but since the primer itself did not have anti-microbial, anti-mold, and anti-viral properties, naturally, even if the water/oil repellent layer was provided, the anti-microbial, anti-mold, and anti-viral properties were poor. In Comparative Example 5, a general antibacterial layer was used as a primer layer, but adhesion to the water/oil repellent layer was insufficient, and abrasion resistance was significantly poor. In Comparative Examples 6 and 8, only the anti-microbial, anti-mold, and anti-viral layer (primer layer) was provided without providing the water/oil repellent layer, but although the anti-microbial, anti-mold, and anti-viral properties were sufficient, if oil stains such as fingerprints adhered, the oil stains could not be wiped off. In Comparative Example 7, fluorine-based compound was used as the water/oil repellent layer, but the anti-microbial, anti-mold, and anti-viral properties were lost. In Comparative Example 9, only the water/oil repellent layer was provided without providing the primer layer, but the anti-microbial, anti-mold, and anti-viral properties were not sufficient.

It is considered that the silanol group remains in the anti-microbial, anti-mold, and anti-viral primer (Primers 1 and 2) used as the primer layer, which helps adhesion to the water/oil repellent layer. Even in the case of using Compound 6 as the water/oil repellent layer on the surface thereof (Comparative Example 7), the effect is not lost. Therefore, a film having both water/oil-repellent property and anti-microbial, anti-mold, and anti-viral properties could be formed.

### [Examples 9 and 10 and Comparative Examples 10 and 11]

In the same manner as described above, a water/oil repellent layer using Compound 1 was formed/deposited in the thickness shown in Table 2 on the outer surface of the primer layer of the substrate in which the primer layer 2 was formed in the thickness shown in Table 2 to prepare a specimen, and the same evaluation as described above was performed using the obtained specimen, and the results as shown in Table 2 below were obtained.

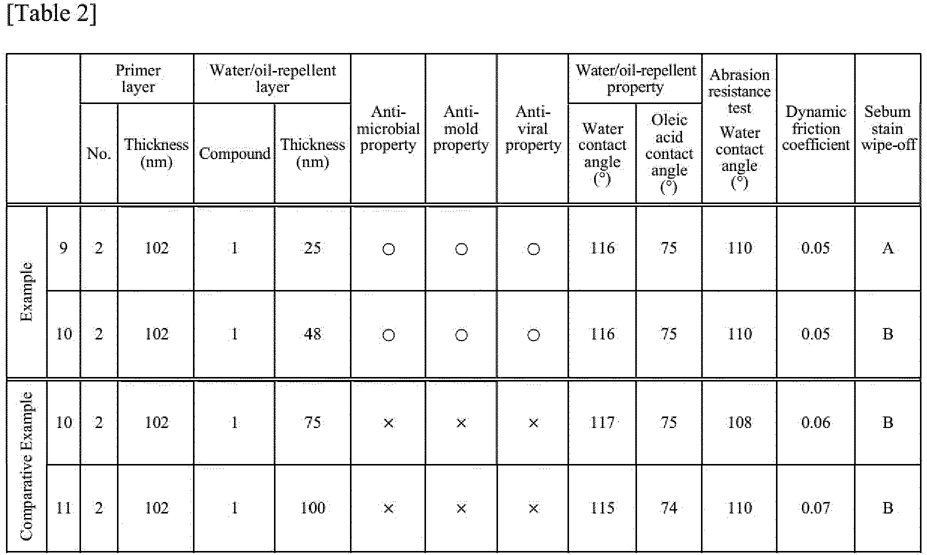

As is evident from the results in Table 2, it is confirmed that, if the water/oil repellent layer becomes too thick, the anti-microbial, anti-mold, and anti-viral properties of the outer surface of the water/oil repellent layer are impaired (Comparative Examples 10 and 11), and in order to achieve both the water/oil-repellent property and the anti-microbial, anti-mold, and anti-viral properties, it is important to make the water/oil repellent layer a thin layer having a specific thickness range.

### INDUSTRIAL APPLICABILITY

According to the present invention, a water/oil repellent member having a cured film (primer layer + water/oil repellent layer) with excellent water/oil-repellent property and excellent anti-microbial, anti-mold, and anti-viral properties can be formed by only wet coating and room temperature process. The present invention is a technology that enables large area coating and site construction. Therefore, the water/oil repellent member of the present invention enables production of a functional film in a roll form and can maintain a clean and satisfactory antifouling surface over an extended period even in electronic equipment housings or articles which are of daily use and frequent touch.

## Claims

1. A water/oil repellent member having anti-microbial, anti-mold, and anti-viral properties, the water/oil repellent member comprising a substrate, a primer layer on at least one surface of the substrate as a first layer, and a water/oil repellent layer on an outer surface of the primer layer as a second layer,
the primer layer being composed of a layer containing a silicon-compound-based binder and metal microparticles and/or metal oxide microparticles having anti-microbial, anti-mold, and anti-viral properties, and having a thickness of 10 to 5,000 nm,
the water/oil repellent layer being composed of a layer containing a cured product of a fluorine-containing organosilicon compound as a principal component and having a thickness of 0.5 to 50 nm.

2. The water/oil repellent member according to claim 1, wherein the silicon-compound-based binder is a silica-based or siloxane-based silicon compound containing a silanol group.

3. The water/oil repellent member according to claim 1 or 2, wherein the metal microparticles having anti-microbial, anti-mold, and anti-viral properties are microparticles of at least one metal selected from silver, copper, and zinc.

4. The water/oil repellent member according to any one of claims 1 to 3, wherein the metal oxide microparticles having anti-microbial, anti-mold, and anti-viral properties are microparticles of titanium oxide.

5. The water/oil repellent member according to any one of claims 1 to 4, wherein the fluorine-containing organosilicon compound is a fluorine-containing organosilane compound or fluorine-containing organosiloxane compound having at least one hydrolyzable silyl group at one or more molecular chain ends, or a fluorine-containing polysilazane compound, the hydrolyzable silyl group being a silyl group having a group selected from a C₁₋₁₂ alkoxy group, a C₂₋₁₂ alkoxyalkoxy group, a C₁₋₁₀ acyloxy group, a C₂₋₁₀ alkenyloxy group, a halogen group, and an amino group.

6. The water/oil repellent member according to any one of claims 1 to 5, wherein the fluorine-containing organosilicon compound is a fluorooxyalkylene group-containing organosilane compound or fluorooxyalkylene group-containing organosiloxane compound having, in the molecule, a divalent linear perfluorooxyalkylene polymer residue represented by:
-C_{d}F_{2d}-O-(CF₂O)ₚ(CF₂CF₂O)_{q}(CF₂CF₂CF₂O)ᵣ(CF₂CF₂CF₂CF₂O)ₛ(CF(CF₃)CF₂O)ₜ-CdF_{2d}-wherein p, q, r, s, and t are each independently an integer of 0 to 200, p+q+r+s+t is 3 to 500, each repeat unit in parentheses to which p, q, r, s, and t are attached may be randomly arranged, d is an integer of 0 to 8 independently for each unit, and the unit with d may be linear or branched,
and having at least one hydrolyzable silyl group at one or more molecular chain ends, or a fluorooxyalkylene group-containing polysilazane compound having the divalent linear perfluorooxyalkylene polymer residue.

7. The water/oil repellent member according to any one of claims 1 to 6, wherein the fluorine-containing organosilicon compound is at least one selected from fluorooxyalkylene group-containing organosilane compounds or fluorooxyalkylene group-containing organosiloxane compounds having the following general formulae (1) to (5) and a fluorooxyalkylene group-containing polysilazane compound having the following general compositional formula (6):
(A-Rf)_{α}ZW_{β} (1)
Rf(ZW_{β})₂ (2)
Z'(Rf-ZW_{β})_{γ} (3)
wherein Rf is independently a divalent linear perfluorooxyalkylene polymer residue represented by:
-C_{d}F_{2d}-O-(CF₂O)ₚ(CF₂CF₂O)_{q}(CF₂CF₂CF₂O)ᵣ(CF₂CF₂CF₂CF₂O)ₛ(CF(CF₃)CF₂O)ₜ-C_{d}F_{2d}-, p, q, r, s, and t are each independently an integer of 0 to 200, p+q+r+s+t is 3 to 500, each repeat unit in parentheses to which p, q, r, s, and t are attached may be randomly arranged, d is an integer of 0 to 8 independently for each unit, and the unit with d may be linear or branched; A is independently a fluorine atom, a hydrogen atom, or a monovalent fluorine-containing group whose end is a -CF₃ group, a -CF₂H group, or a -CH₂F group, Z and Z' are each independently a single bond, or a di to octa-valent organic group which may contain a nitrogen atom, an oxygen atom, a silicon atom, a phosphorus atom, or a sulfur atom and may be substituted with fluorine, and W is independently a monovalent organic group having a hydrolyzable group at the end; α and β are each independently an integer of 1 to 7 and α+β is 2 to 8; and γ is an integer of 2 to 8,
A-Rf-Q-(Y)₆-B (4)
Rf(Q-(Y)_{δ}-B)₂ (5)
wherein Rf and A are as defined above, Q is independently a single bond or a divalent organic group, δ is independently an integer of 1 to 10, Y is independently a divalent organic group having a hydrolyzable group, and B is independently a hydrogen atom, a C₁₋₄ alkyl group, or a halogen atom, and
A-R f-Q-Si(NH)_{3/2} (6)
wherein Rf, A, and Q are as defined above.

8. The water/oil repellent member according to claim 7, wherein the fluorooxyalkylene group-containing organosilane compound, the fluorooxyalkylene group-containing organosiloxane compound, and the fluorooxyalkylene group-containing polysilazane compound having formulae (1) to (6) are the following: 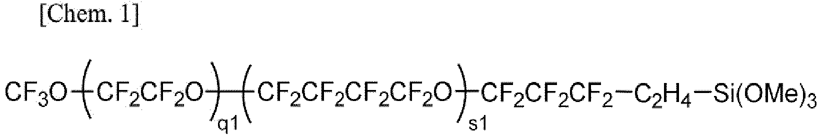 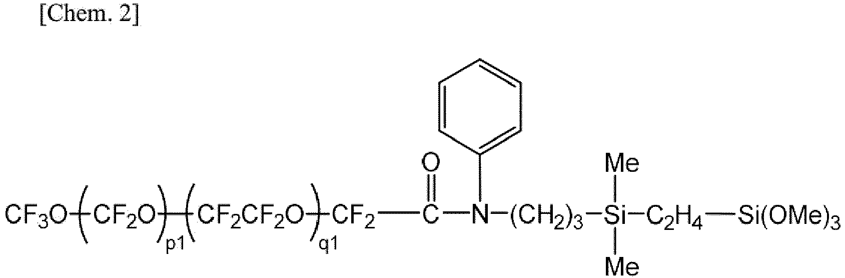 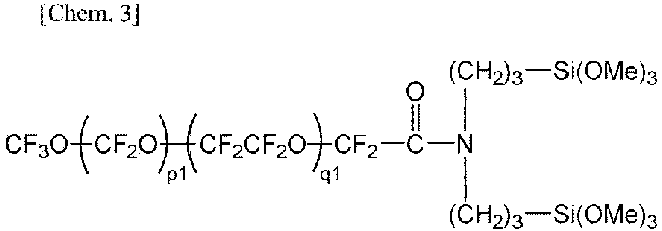 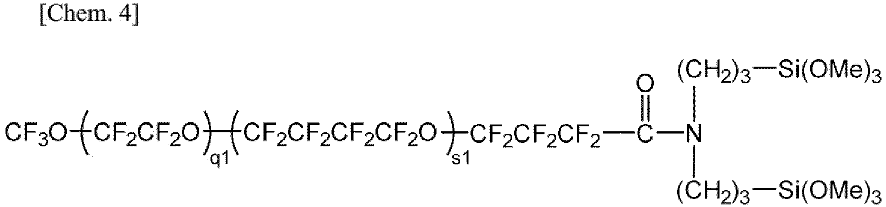 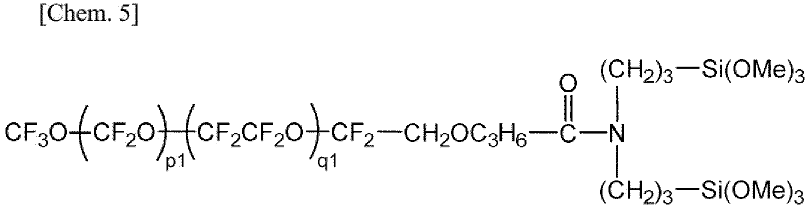 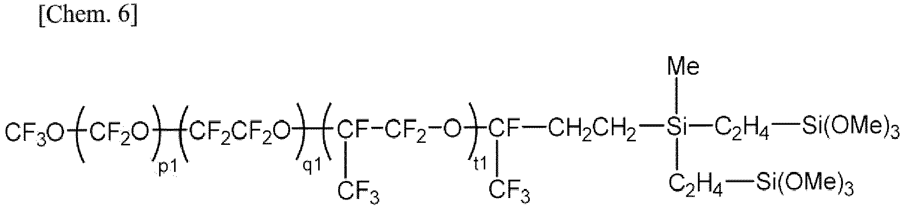 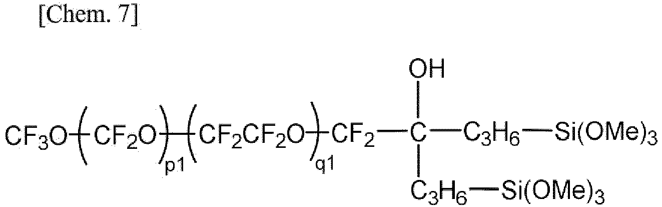 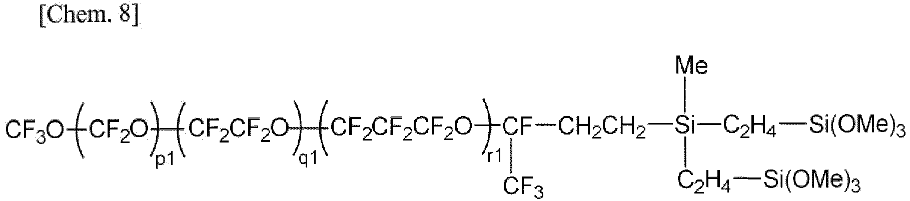 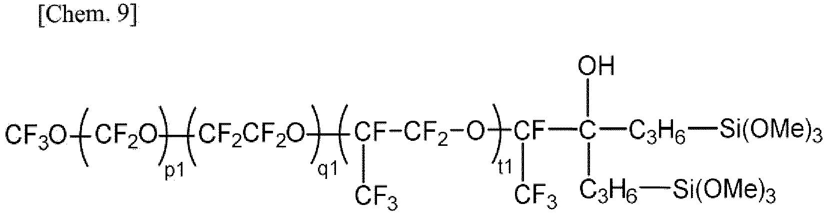 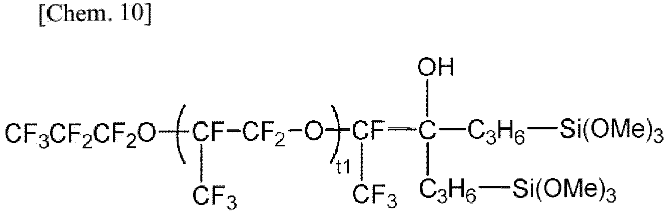 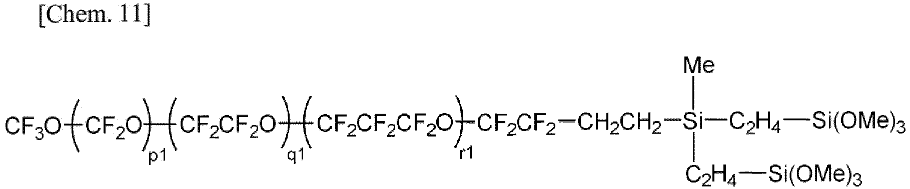 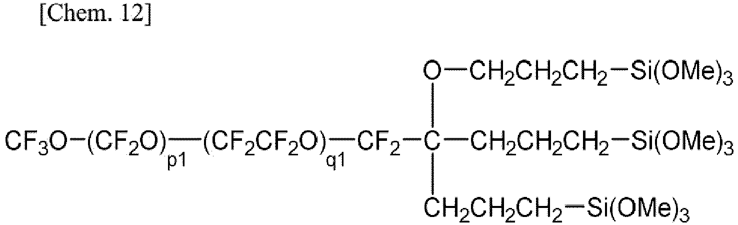 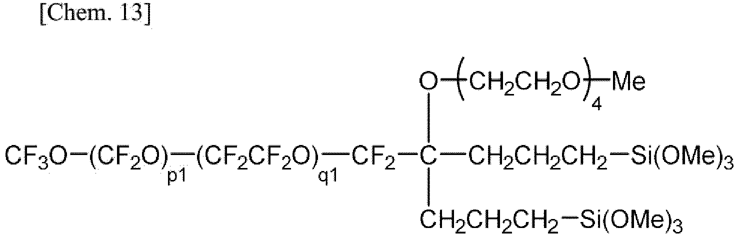 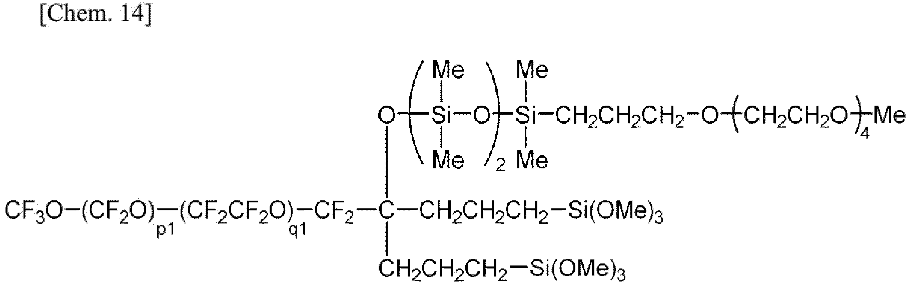 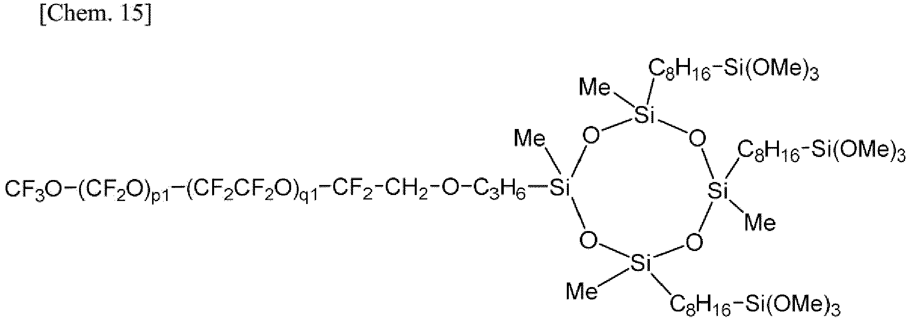 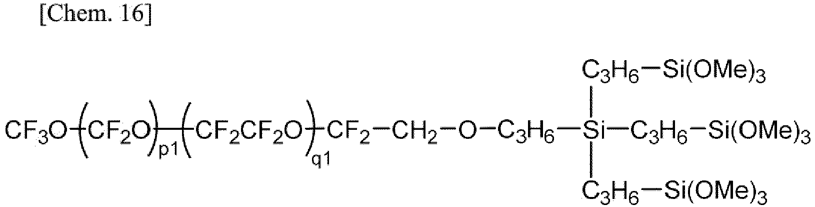 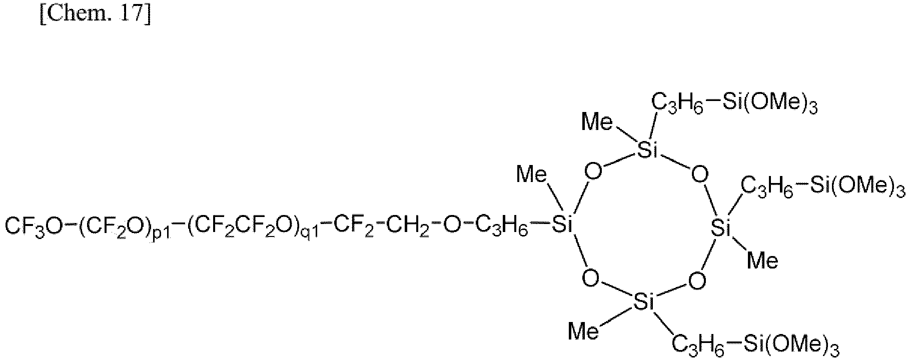 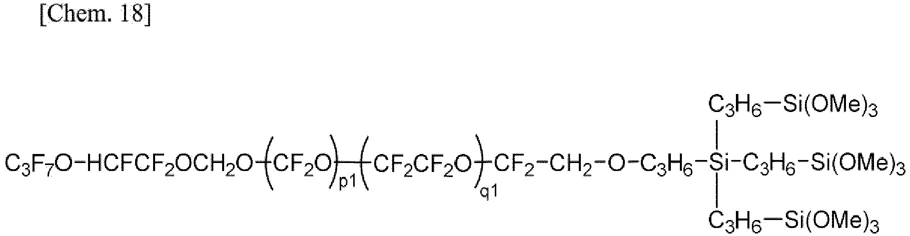 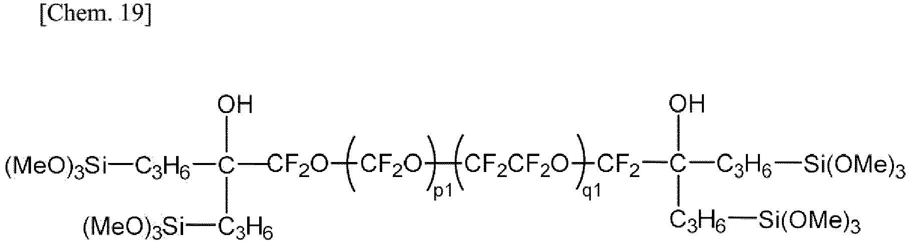 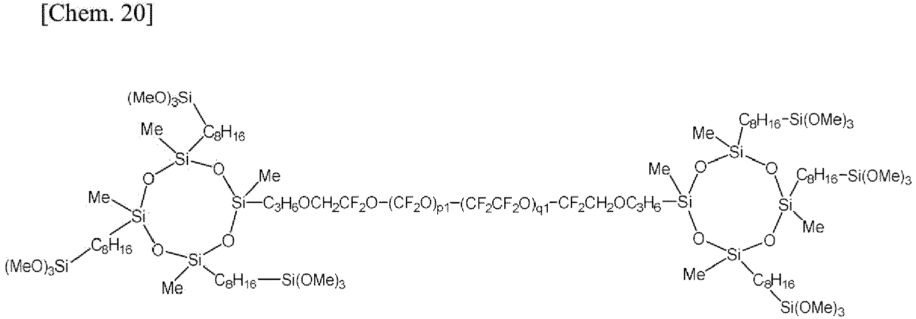 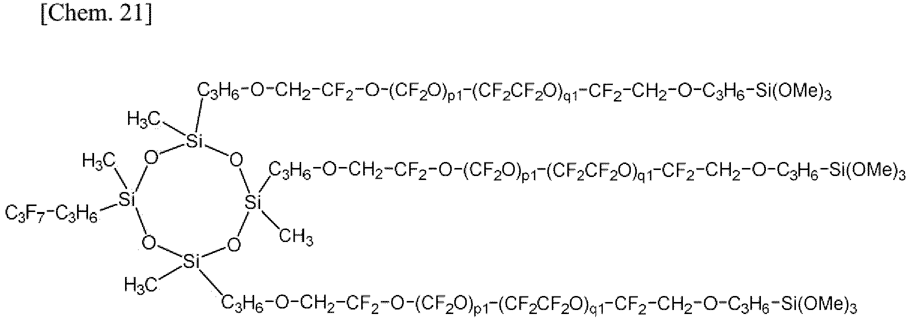 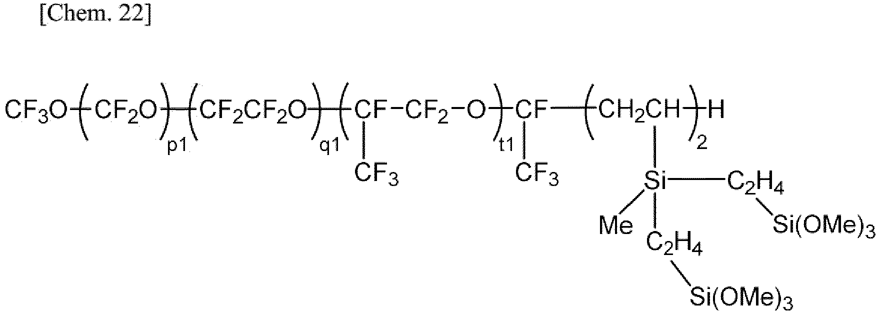 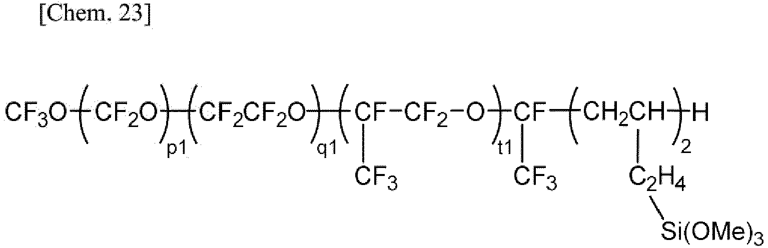 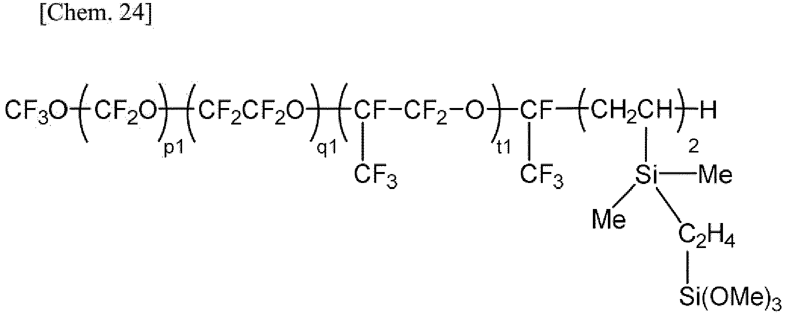 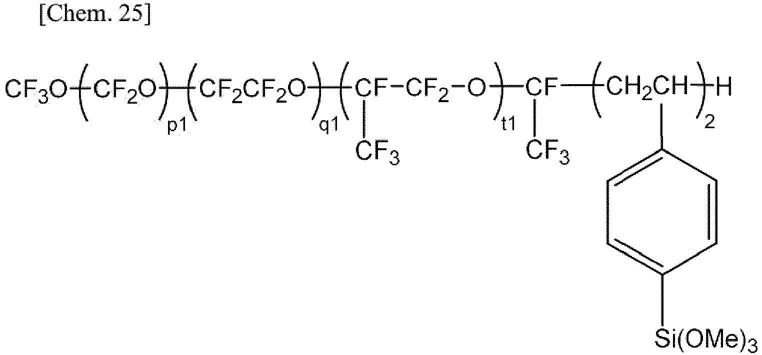 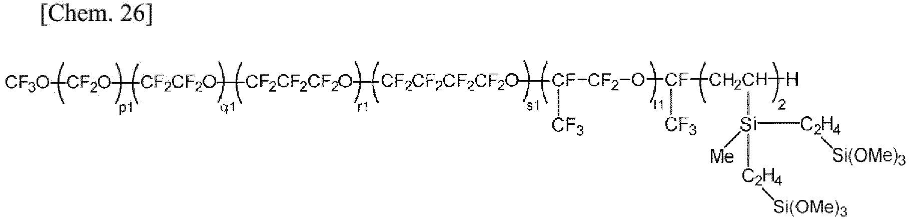 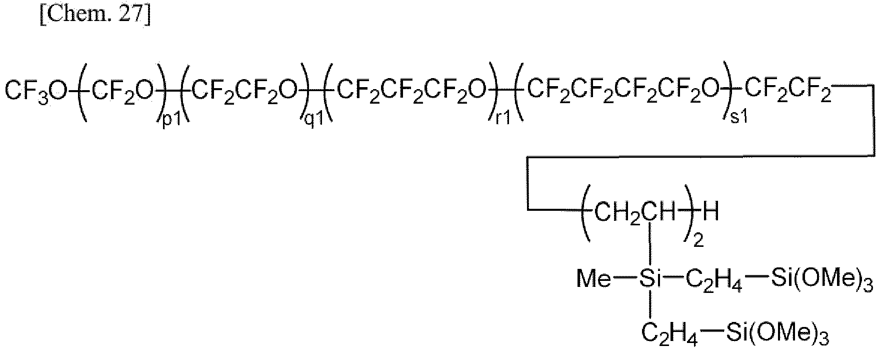 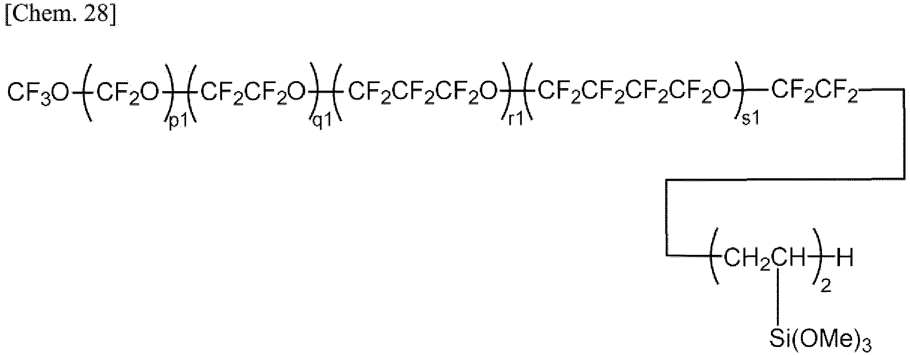 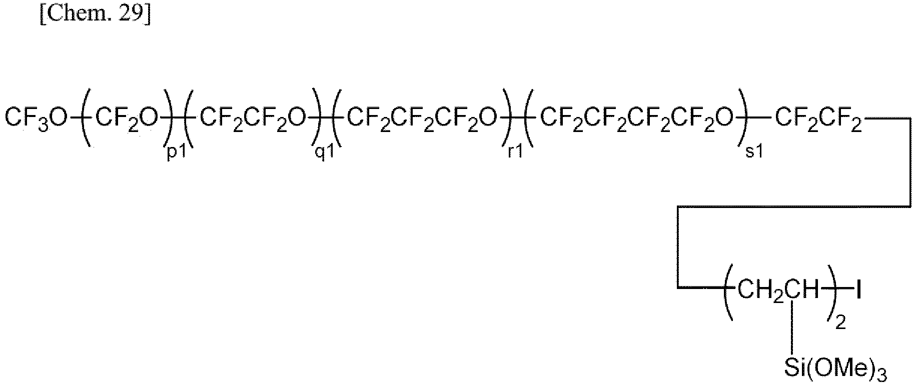 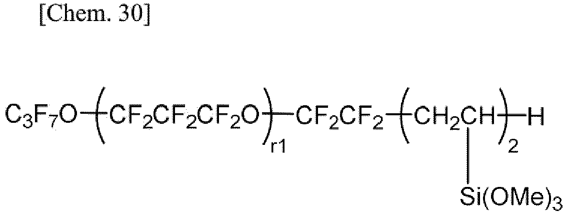 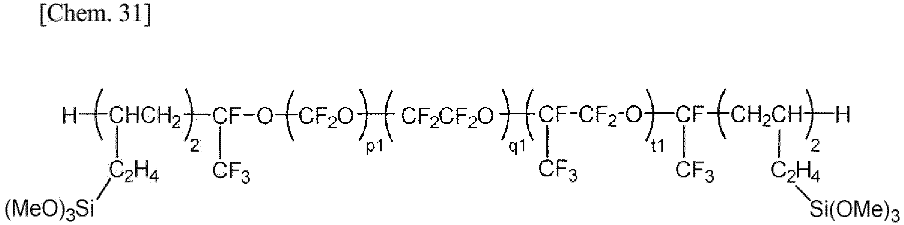 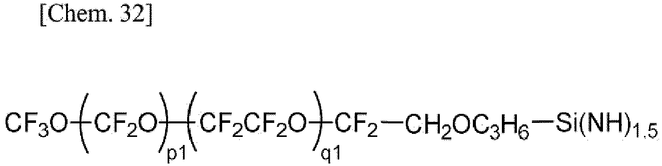 wherein Me is a methyl group, p1, q1, r1, s1, and t1 are each independently an integer of 1 to 200, the sum of p1, q1, r1, s1, and t1 is 3 to 500, and each repeat unit in parentheses to which p1, q1, r1, s1, and t1 are attached may be randomly arranged,

9. The water/oil repellent member according to any one of claims 1 to 8, wherein the substrate is of resin, metal, ceramic, glass, sapphire, marble, or artificial marble.

10. An article using the water/oil repellent member according to any one of claims 1 to 9.

11. The article according to claim 10, which is a building member, a kitchen member, furniture, an electronic device, a transportation device, or a sanitary ceramic.

12. A method for producing the water/oil repellent member according to any one of claims 1 to 9, the method comprising the steps of:
wet coating a solution containing a silicon-compound-based binder, metal microparticles and/or metal oxide microparticles having anti-microbial, anti-mold, and anti-viral properties, and a dispersion medium on at least one surface of a substrate,
removing the dispersion medium in the solution to form/deposit a primer layer containing the silicon-compound-based binder and the metal microparticles and/or metal oxide microparticles having anti-microbial, anti-mold, and anti-viral properties on at least one surface of the substrate,
wet coating a solution containing a fluorine-containing organosilicon compound or dry coating the fluorine-containing organosilicon compound on an outer surface of the primer layer, and
curing the fluorine-containing organosilicon compound to form/deposit a water/oil repellent layer on the outer surface of the primer layer.
